(19) Europäisches Patentamt
European Patent Office
Office européen des brevets

(11) **EP 4 636 669 A1**

(12) **EUROPEAN PATENT APPLICATION**
published in accordance with Art. 153(4) EPC

(43) Date of publication:
**22.10.2025 Bulletin 2025/43**

(21) Application number: **23902913.5**

(22) Date of filing: **12.12.2023**

(51) International Patent Classification (IPC):
*G06Q 20/00* (2012.01)    *H04L 9/00* (2022.01)
*G06K 19/00* (2006.01)    *G06F 21/00* (2013.01)

(52) Cooperative Patent Classification (CPC):
**G06F 21/00; G06K 19/00; G06Q 20/00; H04L 9/00**

(86) International application number:
**PCT/IB2023/062561**

(87) International publication number:
**WO 2024/127253 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 MX 2022016282**

(71) Applicant: **MYCASHLESS SAPI DE CV
Ciudad de México, 06700 (MX)**

(72) Inventor: **BECERRA MORALES, Enrico
CIUDAD DE MÉXICO, 06700 (MX)**

(74) Representative: **Durán-Corretjer, S.L.P.
Còrsega, 329
(Paseo de Gracia/Diagonal)
08037 Barcelona (ES)**

(54) **METHOD, DEVICE AND SYSTEM FOR TRANSFERRING DATA**

(57) Method, apparatus, and system for transfering data

A method and system for transferring encrypted data from a first electronic device to a second electronic device, each of the electronic devices including an input/output interface, a memory and a processor. The method can be carried out without the first and/or second electronic device having an active data signal. The method includes the steps of displaying a first encrypted two-dimensional code at the output interface of the first electronic device, reading the first encrypted two-dimensional code with the input interface of the second electronic device, and decrypting the first two-dimensional code with the processor and memory of the second electronic device, generating a second encrypted two-dimensional code with the processor and memory of the second electronic device in response to the first decrypted two-dimensional code, and displaying the second encrypted two-dimensional code on the output interface of the second electronic device, reading the second encrypted two-dimensional code with the input interface of the first electronic device and decrypting the second two-dimensional code with the processor of the first electronic device and generating an action on the first electronic device based on the second decrypted two-dimensional code. The second two-dimensional code is a plurality of two-dimensional codes.

Fig. 2

EP 4 636 669 A1

**Description**

Field of the Invention

This invention relates to methods, devices and systems for the transfer of data, preferably without active connections, such as a connection to the Internet, and using a reading device of a mobile device, such as an optical reading device or a personal area network, and communication media, such as a Secure Animated Response Code (SAR), near range communication media, such as Near Field Contact (NFC) or Bluetooth® among others.

Background of the Invention

Computer systems and networks facilitate data transfer processes. It is common in the art for data transfer, e.g. in a transaction, to be performed by two devices, such as two mobile devices that require an active connection, such as a connection to a network, to perform authentication and security operations, to access user accounts, to verify data, and to ensure that at least one of the two devices is authorized to perform the data transfer.

Occasionally, at least one of the two devices may not have a connection to a data network, such as the Internet, while it is still desirable to carry out the data transfer using the device. In the art this is solved by using wireless technologies that use short radio waves, such as Bluetooth® or Near Field Communications (NFC) technology.

In methods that use QR codes, the QR codes are generated on mobile devices which have a connection to a network, such as a mobile network with an Internet connection. An example of this is patent document US 2015/0178721. US 2013/0111208 provides techniques for authentication via a mobile device.

The applicant disclosed methods wherein users can make recharges and orders, among other methods, without requiring an online connection, in Mexican Patent Application MX/a/2020/005559, which was granted as Mexican Patent No. 397751.

In the prior art there is no method, device or system that is capable of carrying out communication without an active connection, such as a connection to a network, that performs authentication and security operations, to access accounts of the user to verify data and to ensure that at least one of the two devices is authorized to carry out the data transfer.

It is therefore necessary to provide methods, devices and systems capable of communication without an active connection, for example, to a network, which provide the required security for data transfers wherein high security is needed, e.g. a financial transaction.

Brief Description of the Invention

A Secure Animated Response (SAR) code is a set of encrypted quick response (QR) codes or any other two-dimensional code, such as e.g. a Universal Product Code (UPC). The SAR code is used to transfer data, wherein the devices that are being used in the transfer are validated while the nodes of the devices do not have an active connection to the network, thus still allowing a secure and fast transfer of data.

Unlike NFC, the SAR code requires a direct line of sight between the QR code and an optical reading device, such as a camera or a reader, enabling the optical reading device to obtain an image of the code. As a result, thereof, QR codes cannot be listened in by third-party devices. While the QR code can be kept sufficiently secure by limiting the time that it is displayed or exhibited and by monitoring the QR code as regards its line of sight, the code could be subject to decryption. A SAR code, on the other hand, is a sequence of QR codes in which at least one of the QR codes is valid. The present invention displays the SAR code as a video, wherein the optical reading device obtains all the images, and the device connected to the optical reading device, by means of at least one processor and one memory, identifies the at least one valid QR code and decrypts the information to be transferred.

The system preferably requires at least two devices, each device having a processor, a flash memory and a storage memory, an input/output interface, such as e.g. a screen and a camera, a keyboard, etc., and a communication interface. However, the system can comprise and work with any of the two complete Turing devices that can drive the one-way communication, e.g. one device can provide an output, such as on a screen, and the second device can receive an input, such as with a camera. At least one of the at least two devices can be replaced by a chip containing other communication technologies, such as NFC or Bluetooth® among others. For the generation of the SAR code, in a first device, such as e.g. a first mobile device, the data to be transferred are encrypted with an encryption key and with a private key, a set of data that is encrypted with encryption standards, such as e.g. a 256-bit advanced encryption standard (AES), thereby being generated. A frame number is added to the encrypted data, and a set of QR codes are generated, wherein at least one QR code includes the encrypted data. The SAR code is displayed on the first device in a video format, the set of QR codes being sequentially or randomly displayed. The reading of the SAR code is carried out on a second device, such as e.g. a second mobile device, which reads the SAR code by means of an optical reader, such as e.g. a camera, capturing the SAR as images. The at least one valid code within the SAR code is identified on the second device, wherein the encrypted data is integrated into the at least one valid code. The at least one valid code is then decrypted with a decryption key, the frame number being deleted and the transfer information extracted.

With the above, different data transfers can be carried out. By way of example, a data transfer such as a financial or goods transaction can be carried out with the method of the present invention, even without having an active connection to a network, such as the Internet. For example, a recharge, a purchase or a refund can be envisaged within the data transfers.

An object of this invention is to provide a method, device and system for the transmission of data between at least two electronic devices without an active network connection.

Another potential object of this invention is to provide a method, a device and a system for the efficient transfer of data between at least two electronic devices without the need for an active network connection.

Another potential object of the invention is to provide a method, a device and a system for the transmission of data between at least two electronic devices in a secure manner, by carrying out authentication and security operations, accessing the accounts of the parties by verifying data, and ensuring that at least one of the two devices is authorized to carry out the data transfer.

Brief Description of the Figures

These and other objects will be evident when the following description is taken into account in correlation with the figures detailed below:

Figure 1 is a high-level block diagram of at least one of the two devices in this invention, such as a mobile device, of a preferred embodiment.

Figure 2 is a high-level functional block diagram of an illustrative device/communication system providing communication between devices with the two-dimensional code generation service of a preferred embodiment.

Figure 3 is a flowchart that shows the generation and encryption of two or more two-dimensional codes in the form of SAR codes of a preferred embodiment.

Figure 4 is a flowchart that shows the decryption of previously encrypted two-dimensional codes in the form of SAR codes of a preferred embodiment.

Figure 5 is a flowchart that shows the generation and encryption of two or more two-dimensional codes in the form of SAR codes of another preferred embodiment.

Figure 6 is a flowchart that shows the decryption of previously encrypted two-dimensional codes in the form of SAR codes of another preferred embodiment.

Figure 7 is a flowchart that shows steps of a method for an on-site purchase with age validation and promotions of a preferred embodiment, wherein the validation is carried out on the operator side.

Figure 8 is a flowchart showing the steps of a method for an online recharge with auto-refunding and operator-side validation.

Figure 9 is a flowchart showing the steps of a method for an on-site purchase with operator-side validation and with operator input to a new event according to another preferred embodiment.

Figure 10 is a flowchart that shows the steps of a method for on-site refunding with an initial validation of a preferred embodiment.

Figure 11 is a flowchart that shows the steps of an on-site recharge allowing a change of event of a preferred embodiment.

Figure 12 is a flowchart showing the steps of an on-site recharge that can be carried out in incognito mode and that allows the change of event according to another preferred embodiment.

Figure 13 is a flowchart for an on-site privileged access that also allows an event change according to a preferred embodiment.

Figure 14A is a flowchart of an on-site purchase with paper tickets of a preferred embodiment.

Figure 14B is a flowchart of an on-site purchase with paper tickets of another preferred embodiment.

Figure 15 is a flow diagram of a closed circuit while online as a secondary process, if there is no previous charge according to a preferred embodiment.

Figure 16 is a flowchart of an on-site purchase with operator-side validation with a service charge within the same validation according to a preferred embodiment.

Figure 17 is a flowchart of an on-site purchase with operator-side validation with a service charge as a separate validation in accordance according to yet another preferred embodiment.

Figure 18 is a flowchart of an on-site purchase with operator-side validation with a user-side service charge according to another preferred embodiment.

Figure 19 is a flowchart of an on-site purchase with operator-side validation while online and with a backup offline mode.

Figure 20 is a flowchart of an on-site purchase with operator-side validation while online and with a backup offline mode, where event improvement opportunities are enabled.

Figure 21 is a flowchart of an on-site purchase with operator-side validation while online and with a backup offline mode, where skipping the recharge with operator signal leverage is enabled.

Figure 22 is a flowchart of an on-site purchase with operator-side validation while being online and with an offline backup mode, where a pre-authorized balance is included.

Figure 23 is a flowchart of an on-site purchase without a two-dimensional user code, applicable only when the user generates a SAR code.

Figure 24 is a flowchart of a purchase with user-side validation, with backup offline mode and where the operator may not have a device.

Detailed Description of the Invention

Definitions

Device: Device is understood to mean any type of mobile device such as e.g. a smartphone, a mobile computer, a personal digital assistant (PDA), a tablet, a smartwatch or another electronic 'smart device'. Likewise, a device can be a bracelet containing an NFC-compatible chip or a fitness tracker that may or may not have a display; if it does not have a display, it is preferred that the fitness tracker have an NFC-compatible chip.

Card: Any type of card, including, but not limited to, a credit or debit card, a bank card, other types of transaction cards, a driver's license, a passport, other identification cards, or any other type of card that may contain personal information.

Code: an encrypted signal, which can be a two-dimensional code;
Two-dimensional code: at least one QR code with information that is readable by the devices used in the invention; more than one QR code can be used by the method of the present invention. One or more two-dimensional codes are needed to carry out the method and the system of the present invention.

The two-dimensional code can be replaced by codes or signals that include the data included in the QR codes and with encryption and decryption methods according to the necessary standards for the transmission of confidential information.

Printed code: a printed encrypted two-dimensional code.

SAR code: A video that comprises at least two QR codes, wherein the video is displayed in an animated manner.

Generally, both the two-dimensional code and the SAR code include information necessary for the validation of an information transaction, information that, for purposes of illustration in a non-limiting manner, may include information such as the date, event number or name, vendor name, order numbers, order data, balances, promotions, balance promotions, tokens, card status, signal strength, and user's personal data, such as name, gender, age, user's photograph, among other data.

It is generally preferred that security animations be included so that if touched on a touch screen it can be moved with the touch of a finger, to ensure that the image is not a fake screen capture or video. Other security systems known and to be known in the art can also be deemed to be included in the present invention in a non-limiting but exemplary way.

Data Signal or Network Connection: Data signal or network connection refers to the processing and transmission of data (a bitstream) over a point-to-point or point-to-multipoint communication channel by means of wired or wireless connections through WAN-, MAN- and/or LAN-type networks, wherein, in one embodiment, the WAN connection can be the Internet.

In the described methods, there can be submethods that can be carried out in a face-to-face embodiment, wherein the devices have at least one camera on the same side as the screen and the reading/scanning method is carried out without intervention of the operator and/or the user when the respective mobile device is flipped-over.

Communication media: a way for at least two devices to communicate by media such as SAR, Near Field Contact (NFC), or Bluetooth® among others. In the described methods, communication media can be generated that generate short-range signals as described above, or other types of media.

Payment: any type of instrument provided by the user or operator to make a transaction, e.g. a card or cash.

The following detailed description may indistinctly refer to the figures. In the following detailed description, several specific details are disclosed as examples to provide for a complete understanding of the relevant concepts. On other occasions, methods, processes, components and/or circuits have been described at a relatively high level, without detail, to avoid obscuring the teachings herein in an unnecessary manner.

Several methods and systems described herein are related to the generation of two-dimensional codes, preferably at least two two-dimensional codes, such as a QR code or a SAR video with at least two QR codes and more preferably a plurality of QR codes for secure communication between/to devices 13, such as a mobile device.

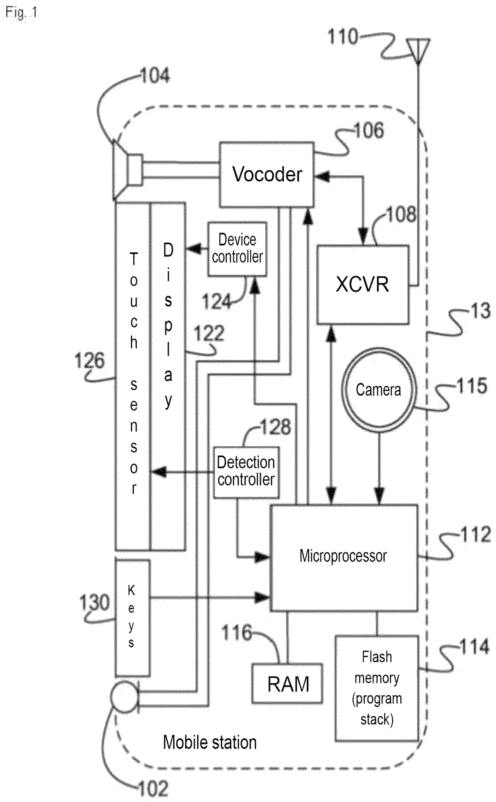

Figure 1 shows a block diagram illustration of a device 13, such as a mobile device. Mobile device 13 may be a smartphone or it may be another portable device, such as a personal digital assistant (PDA), a tablet, a smartwatch, a smart headphones/glasses, and/or a similar device. In another embodiment, mobile device 13 may be a customized device such as a smart card with a display built in the card (e.g., e-ink, OLED, etc.), a processor, a built-in power supply and/or other suitable elements. In the embodiment, the headset of mobile device 13 works like a standard digital cordless phone. For that function, the device includes a microphone 102, a loudspeaker 104, and coding and decoding (vocoder) circuits 106 for an input and output audio signal.

For digital wireless communications, device 13 also includes at least one digital transceiver (XCVR) 108 connected to an antenna 110. The concepts discussed herein include embodiments of device 13 that use any digital transceiver pursuant to current or future digital wireless communication standards. Device 13 can also be capable of analog operation via legacy network technology. The mobile device may also include several transceivers configured for communication over different types of networks, such as Wi-Fi, Bluetooth, infrared, mobile or similar networks.

Device 13 includes a screen 122 for displaying messages, menus, applications, etc., including two-dimensional codes such as the QR and SAR codes generated by the applications running on device 13. Keypads 130, touch sensors 126 and touch controllers 128 provide a data input interface for receiving selections and commands from the user. Screen 122, keypads 130 and touch sensor 126 are physical elements that provide a graphical or contextual user interface. Other physical elements of the mobile device may be included additionally and incorporated into the operation of device 13 and the user interactions, such as an inertial measurement sensor, biometric sensors, spatial image sensors and the like. Various combinations of keyboard 130, screen 122, microphone 102 and speaker 104 can be used as output elements of the graphical user interface (GUI), for multimedia communications, e.g. audio or video. Of course, other interface elements may be used, such as a mouse, as is the case in certain PDAs or smartphones.

Device 13 additionally includes one or more cameras 115 that are used to capture static images or video footage. Camera 115, in particular, can be used to capture images of two-dimensional codes, such as a QR code or a SAR video with at least two QR codes and more preferably a plurality of QR codes, to be processed in a QR reading application running on device 13. Camera 115 provides captured image data to processor 112 for storage in a memory 114, 116 and/or processing.

In addition to standard data communication and telephone input/output, the user interface elements can also be used for displaying menus and other information to the user and the user's selection entries, including any that is needed during the dynamic generation of QR codes.

Microprocessor 112 acts as a programmable controller for device 13, wherein it controls the operations of device 13 in accordance with the commands executed, for all standard operations, and for operations involved in the functionalities related to two-dimensional codes under the considerations herein. For example, mobile device 13 includes a flash-type programming memory 114 for storing various settings programming and configuration routines.

Device 13 may also include a random-access memory (RAM) 116 for a working data processing memory. Of course, other storage devices or configurations may be added to or replaced with those in this example. In one embodiment of the present invention, flash-type memory 114 stores commands such as reboot routines, controller information, an operating system, vocoder call and control processing routines, and a variety of other applications, such as browsers, messaging services and the like. Memories 114 and 116 also store other information, such as telephone numbers and server addresses, downloaded data such as multimedia content and various user-entered data such as account configuration data. The information stored in memory 114 is normally loaded and executed in microprocessor 112.

As mentioned above, the devices 13 include a processor, and a memory 114 that comprises algorithms configured so that the device's processor is capable of performing various desired functions, including the functions described below with the two-dimensional codes. As mentioned below, the functions relating to the generation and display of two-dimensional codes via graphical user interfaces of the devices 13 can be implemented in computers with the abovementioned components. Special-purpose devices may also be used; such devices must be capable of implementing the authentications that are discussed below without a connection to a network. In general terms, the functions related to the generation and display of two-dimensional codes via a graphical user interface of devices may be implemented in any complete Turing device 13 that includes a graphic display; the complete Turing device preferably includes the previously mentioned components.

The method of the present invention can be carried out on a general-purpose computer that can function as an application server and/or that functions as a device 13. In operation, the method can be stored on a platform of the general-purpose computer. Likewise, the method can be stored in other locations and/or carried to be loaded into the appropriate general-purpose computer system. Carrying out the method on the computer processor enables the implementation of the methodology for dynamically generating and processing two-dimensional codes, such as QR codes for the secure communication to/from devices 13, essentially in the manner discussed and illustrated herein.

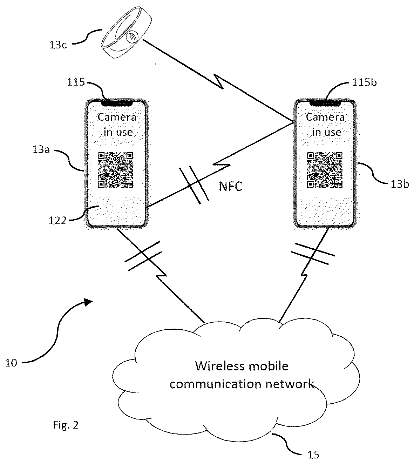

Figure 2 illustrates a system 10 that provides a variety of mobile communication services, including communications for dynamically generating two-dimensional codes for a secure communication from/to devices 13a, 13b. The example shows two mobile devices 13a and 13b without an active connection to mobile wireless communications network 15. Mobile devices 13a and 13b (referenced as devices 13) are examples of devices that can be used for the two-dimensional code generation service. However, the method of the present invention can be carried out with similar devices having the components mentioned above in relation to Figure 1. In each case, the device does not have an active connection to a network, such as mobile wireless communication network 15, the Internet, a LAN, or any other type of wired or wireless connection. The system may use another device 13 that is not a mobile device, such as e.g. among others a general-purpose computer, a bracelet 13c containing an NFC-compatible chip, or a fitness tracker that may or may not have a display. If it does not have a display, it is preferred that the fitness tracker has an NFC-compatible chip. It is important to stress that during the execution of the method of the present invention there is no network 15 or connection to a network 15 from/to the devices 13, as could happen in saturated events, such as e.g. a music festival. The devices can then be connected to a network 15 with current or future standards. As mentioned, one or both of the devices can operate in the modes described herein without a data network connection, a telephone network connection and/or any suitable communication channel outside the visual communication channel enabled through the system and the method described herein. The devices may not have an active NFC either, and in some variations, the active NFC may be disabled, so in some implementations it may be useful to prevent the theft of transaction data. However, the system and the method for the transfer of data described herein can still operate with an existing network connection. Preferably, the system and the method for the communication of data are implemented without a direct dependence on a wireless digital communication, although it can be used when available.

The devices 13 can be capable of generating two-dimensional code services without an active connection to network 15. User devices 13a and 13c are capable of executing the two-dimensional code generator service, as well as applications written in different programming languages. Likewise, operator devices 13b are capable of executing the two-dimensional code generator service, as well as applications written in different programming languages. Devices 13a-13c interact with each other in such a way that, without an NFC, they are able to scan and/or read two-dimensional codes placed within a line of sight, such as two-dimensional codes displayed on mobile devices placed in a reader. The reader can be a camera 115 of devices 13a-13c, a barcode reader or any other suitable peripheral device. Device 13a-13c may include an incoming interface and an outgoing interface used for interacting with the users, for receiving commands and for providing notifications and other outgoing information to the user/operator.

The devices 13 can be mobile devices such as smartphones, personal assistants or general computers, among others, as well as a bracelet containing an NFC-compatible chip or a fitness tracker. The devices are capable of executing applications for a two-dimensional code generator service as well as for a two-dimensional code reader service, wherein the two-dimensional code generator and reader services can be written in different languages and be executed in different environments, wherein some of these devices can employ a multi-tasking operating system.

The devices 13 usually include a camera 115 that can be used to capture images including two-dimensional codes. A device 13 running a two-dimensional code reading application can use a camera as a reader of the two-dimensional code to obtain or scan a QR code. The devices 13 also include an outgoing interface, such as a screen 122, for displaying two-dimensional codes that can be read by a two-dimensional code reader of another device.

The two-dimensional code reader and generator applications, which include the two-dimensional code reader and generator services, include authentication services configured to authenticate the codes generated and displayed by the devices 13. The authentication service may also include services related to encryption, such as the generation, distribution and/or authentication of encryption keys, including pairs of encryption/description keys.

Described herein are several methods implemented in connection with the system described herein and leveraging the method for offline data communication; however, the process and use of SAR-based data communication can be adapted to other suitable user interactions, data management, account management, authentication and/or suitable forms of coordination between two devices.

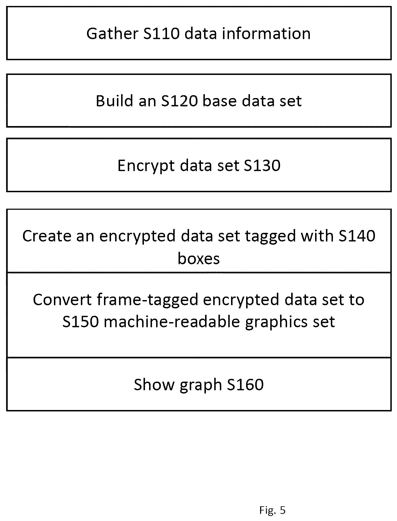

As shown in Figure 5, a method for generating and displaying a SAR code may include mounting data information S110, building a base dataset S120, encrypting the dataset S130, creating a frame encrypted dataset S140, conversion of the frame encrypted dataset to a set of machine-readable graphics S150 and displaying such graphics S160. The mounting of data information works to collect the data to be communicated along with the initial data inputs to initiate the generation of a SAR code. The mounting of data information may include the mounting of information data (for example, the information set to be communicated $I = \{I1, I2, I3, ... Ik\}$, an encryption key $(Ke)$ a private key $(K_{prv})$, and frame number dataset $(FN = \{FN_0, FN_1, FN_2,... FN_k\})$. The frame number set (FN) preferably includes a plurality of frame numbers $((FN_1, ..., FN_x,$ where $k > 1)$. The number of frame numbers $(k)$ preferably corresponds to the information with the second dataset (that is, the number of data elements in the second dataset (where the second dataset is $I = \{I_1, I_2, ... I_k\}$)). Frame numbers $FN_0-FN_k$ are random numbers, not duplicated from a starting number, $min(FN_0, ..., FN_k)$, to a final number, $max(FN_0 - FN_k)$, such that they are formatted with at least two digits. The frame numbers $FN_i$ and the private key, $K_{prv}$ are stored in a memory 114, 116, preferably in a flash memory 114. Building a base dataset works for mounting a dataset from the initial data inputs. Each point in the base dataset can include a string of random data. A new dataset S6 is generated, where $S= \{S_0, ..., S_{min (FN0-FNK)} ..., S_{max(FN0-FNK)}, ... S_m\}$, and $0 < min (FN0-FNK) \leq max(FN_0-FN_k) < M)$, and k is the number of datasets that are a subset of S. That is, for an information set $I=\{I_1, ...,I_k\}$, where $I_i$ refers to the i-th information set within I; a corresponding i-th dataset is generated, $S_{FNi}=[Ii][RnS]$, which is an element of the new dataset generated S6. The S6 dataset is random data and not duplicates of a starting number to an end number, formatted with at least two digits. The engine uses a data length of at least 30 bytes, preferably of at least 50 bytes and most preferably of at least 70 bytes. The new data set $S_i$ 6 comprises the frame number and a random string (RnS) such that $S_0=[FN_0][RnS]$. The FN0 frame data is defined as $SFN_0=[K_{prv}][FN_1][FN_2][FN_3]...[FN_k][RnS]$. The data of $FN_1, FN_2, FN_3, ... FN_k$ are defined as $SFN_1=[I_1][RnS], SFN_2=[I_2]][RnS], SFN_3=[I_5]][RnS]... SFN_k=[I_k]][RnS]$. Dataset encryption works to create an encrypted dataset. Preferably, $S_0$ and $S_{FN0}$ of the base dataset are encrypted with encryption key $K_e$, and the remaining points in the base dataset are encrypted with the private key, $K_{prv}$. Creating a frame marked encrypted dataset works to prepare the encrypted dataset to represent frame data. Encrypted frame marked data preferably adds (or otherwise adds) a frame number corresponding to the corresponding element in the encrypted dataset. For example $S_{ke}'$ will be equal to $[FN_k][S_k]$ for each of k = {0, 1, 2, ..., (Total-Frames-1)}. Converting the encrypted frame-in-frame dataset to a set of machine-readable graphic functions to generate a set of QR codes or other machine-readable elements to be presented in a stream. The machine readable graphics set is preferably QR codes, but alternatively it can be other forms of 2D graphic codes or even 1D graphic codes (e.g. barcodes). A machine-readable code graphically represents data that can be reliably interpreted by a machine with imaging capabilities. In one variation, the dataset can be converted to user interface output media, such as audio, vibratory patterns (output via haptic feedback), infrared light patterns (used in projected light cameras), and/or other suitable media of user interface output. The graphics display can display the set of machine-readable graphics. Machine readable graphics are preferably displayed in the designated order thereof indicated by the frame numbers. Alternatively, machine-readable graphics can be displayed out of order or in a continuously changing order. Furthermore, some of the frameworks that lack informational data or data for reading a SAR code can be omitted. Noise frames could also be added. In a variation, each of the different frames is selected and displayed individually to simulate a video or animation. In another variation, the frames are mounted in a video, GIF, or other suitable video format.

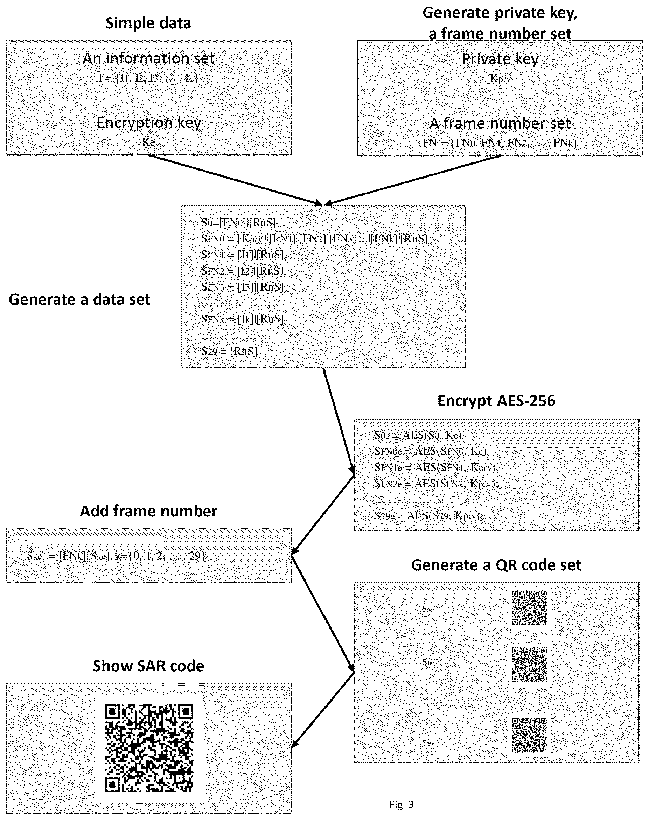

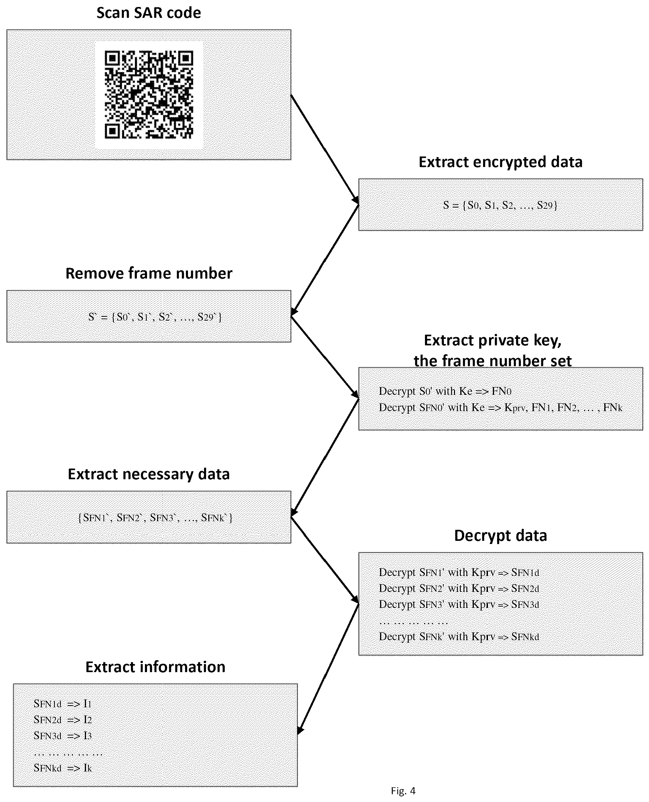

Figure 3 is a flowchart showing the generation of two or more two-dimensional codes in the form of a SAR code. Dataset 2 to be encrypted in the SAR code includes any of the desired or relevant data. As mentioned above, the data may include an event identifier, a user name, the gender of the user, a code, such as a transaction code and/or an event code, the age of the user, etc., amongst other data. Dataset 2 preferably includes an encryption key, wherein the encryption key and the dataset are stored in a memory 114, 116, preferably in a flash memory 114. As part of Figure 4, the generation of a second dataset 4 to be encrypted in the SAR code can also be included, the second dataset 4 including a private Kprv key to encrypt the data, with a random and/or pseudorandom character string that can have 8 or more bytes. A frame that includes a frame number FN and the private key Kprv is generated for the second dataset 4. A plurality of frame numbers FNk is generated and the number of frames FNi stored in i times the Ii information is stored. Frame numbers FN0~FNk are random, non-duplicated numbers from an initial number to a final number that are formatted with at least two digits. The frame numbers FNk and the private key Kprv are stored in a memory 114, 116, preferably in a flash memory 114. From the first dataset 2 and the second dataset 4, a new dataset S6 is generated by an algorithm engine, where the number of datasets S6 is random and not duplicated from an initial number to a final number, formatted with at least two digits. The engine uses a data length of at least 30 bytes, preferably of at least 50 bytes and most preferably of at least 70 bytes. The new data set S 6 comprises the frame number and a random string RNS such that $S_0=[FN_0][RnS]$. The FN0 frame data is defined as $SFN_0=[K_{prv}][FN_1][FN_2][FN_3]...[FN_k][RnS]$. The data of $FN_1$, $FN_2$, $FN_3$, ... $FN_k$ are defined as $SFN_1=[I_1]||[RnS]$, $SFN_2=[I_2]||[RnS]$, $SFN_3=[I_3]||[RnS]$... $SFN_k=[I_k]||[RnS]$. In order to avoid hacking or piracy, the engine uses random strings as additional data. To improve security, the engine can use 8 types of AES-256 encryption and at least two keys or another technology that uses similar or higher standards, where one key ($K_e$) is the public key and the other key (Kprv) is the private key. $S_0$ and $S_{FN0}$ are encrypted with the $K_{mi}$ key, while other data is encrypted with the $K_{prv}$ key, such that:

$$S_{0e}=AES(S_0,K_e)$$

$$S_{FN0e}=AES(S_{FN0},K_e)$$

$$S_{FN1e}=AES(S_{FN1},K_{prv})$$

$$S_{FN2e}=AES(S_{FN2},K_{prv})$$

$$\ldots$$

$$S_{FN29e}=AES(S_{FN29},K_{prv})$$

In addition to decoding the SAR code, the set is changed by adding a frame number 10 to the front of each of datum, so that

$$S_{ke}'=[FN_k][S_{ke}], \quad k=(0, 1, 2, \ldots, 29)$$

In this example, 30 frames are used as an example, but any suitable number of frameworks or value k can be used. After adding a frame number 10, the two-dimensional code set is generated 12, corresponding to each of the data using a ZXing library or the like. The size of a preferred two-dimensional code is 300x300 pixels and this set of two-dimensional codes is stored in memory, preferably in an image format. At the end of this process, the SAR code is shown 14 in the method to display a two-dimensional code at a rate of at least 1 every 70 ms, preferably 1 two-dimensional code every 40 ms. To prevent hacking, the SAR code is not stored on the device 13, it is only temporarily stored in the memory 114, 116.

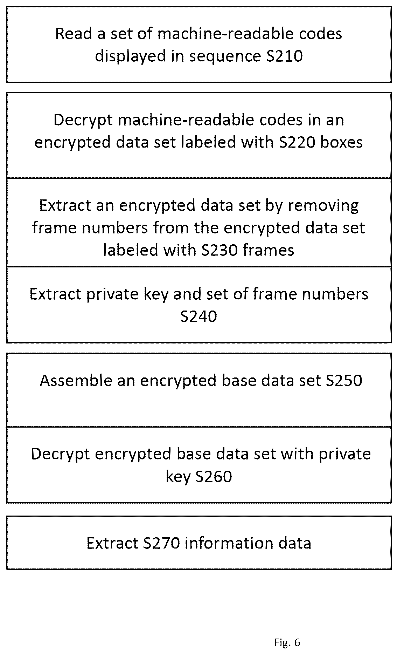

As shown in Figure 6, reading and interpreting the SAR code preferably includes reading a set of machine-readable codes shown in sequence S210, decryption of machine-readable codes in a set of encrypted frame-marked data S220, extracting an encrypted dataset created by removing frame numbers from the encrypted frame marked dataset S230, extracting the private key and frame number set S240, mounting an encrypted base dataset S250, decryption of the encrypted base dataset with the private key S260, and extraction of the information data S270.

Figure 4 is a flowchart showing the decryption of previously encrypted two-dimensional SAR codes. Using the camera, the device 13 provides captured image data 20 to the processor 112 for storage in memory 114, 116 and/or processing with a ZXing library or similar; the engine extracts all frames 22 (two-dimensional code set) from the SAR code and converts them into an encrypted dataset:

$$S=(S_0, S_1, S_2, …, S_{29})$$

Before encryption, the frame number is removed from each of the data in such a way that:

$$S'=(S'_0, S'_1, S'_2, … , S'_{29})$$

This set is stored in memory 114, 116 for decryption. Each encrypted datum starts with a prefixed frame number; therefore the engine extracts FN0 from S0' (first frame data) by decrypting 26 the AES-256 with the public key, $K_e$. When S0' is decrypted with $K_e$, $FN_0$ is extracted. $FN_0$ is then stored in the memory 114, 116 to extract the private key and other frame numbers.

To decrypt $S_{FN0}$ (AES-256 with key $K_e$), the private key ($K_{prv}$) and the frame number set, $FN=(FN_1, FN_2, FN_3..., FN_k)$ are extracted. The $K_{prv}$ and the FN are stored in the memory 114, 116 to decrypt the dataset.

Using the frame number set (FN), the engine extracts the necessary data 28 from S'($SFN_{1'}$, $SFN_{2'}$, $SFN_{3'}$,..., $SFN_{k'}$).

The data of $SFN_1$, $SFN_2$, $SFN_3$, ..., $SFN1_{k'}$ are decrypted with the private key AES-256 ($K_{prv}$); therefore, when it is decrypted with the private key ($K_{prv}$):

$$SFN1' => SFN1d$$
$$SFN2' => SFN2d$$
$$SFN3' => SFN3d$$
$$…$$
$$SFNk' => SFNkd$$

From each decrypted datum, the engine extracts the corresponding information 32, for example from:

$$SFN1d => I1$$
$$SFN2d => I2$$
$$SFN3d => I3$$
$$…$$
$$SFNkd => Ik$$

in such a way that all the information is decrypted and extracted from the SAR code.

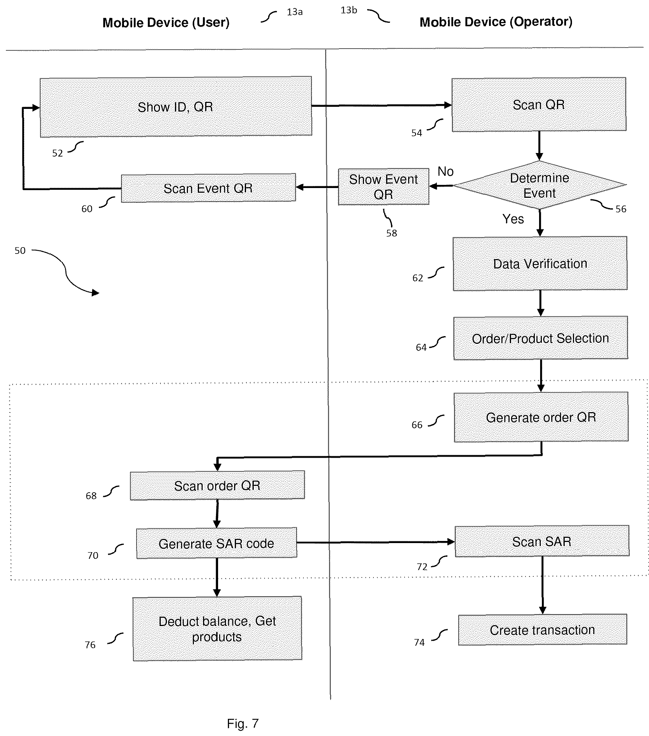

Figure 7 is a flowchart illustratively showing the steps of the method 50 for on-site purchasing with validation of data such as age and promotions, generating and reading two-dimensional codes or media by the devices.

The method starts when the user device 13a displays 52 a two-dimensional code by means of its screen 122, which is scanned or captured by the camera 115 of the operator device 13b. The two-dimensional code may include data such as event, balance, promotions, balance promotions, tokens, and personal user data, such as name, gender, age, user's photograph, among other data. The operator device 13b scans 54 the two-dimensional code, in order to determine 56 whether the event is the correct one. If it is determined 56 that the event is not the correct one, the operator device 13b displays 58 the two-dimensional event code on the display of said operator device 13b in order for the user device 13a to scan 60 said two-dimensional code by means of its camera 115. Upon determining 56 that the event is not correct and having scanned 60 the correct event, the user device 13a may again display 52 a two-dimensional code via its screen 122. If it is determined 56 that the event is correct, the user's data is verified 62 and, given a correct verification 62 of the data, the order or products are selected 64. Once the order or products have been selected 64, a two-dimensional code is generated 66 that includes data such as the order or products selected, user data, balance, promotions, among other data. The generated two-dimensional code 66 is displayed on the screen 122 of the operator device 13b and scanned 68 by means of the camera 115 of the user device 13a. A plurality of two-dimensional codes are generated on the user device 13a, which are displayed as a secure animated response (SAR) code, wherein the plurality of two-dimensional codes may be a plurality of quick response (QR) codes, wherein at least one of the two-dimensional codes includes encrypted information to be validated by the operator device 13b. After generating a plurality of two-dimensional codes 70 and displaying them on the screen 122 of the user device 13a, the generated SAR code is scanned and/or read 72 by a camera 115 of operator device 13b. By means of the two-dimensional code reader service, the method is able to read all the two-dimensional codes provided in the SAR code and to distinguish at least one valid two-dimensional code which must be decrypted. The decryption service is capable of decrypting at least one valid two-dimensional code to be decrypted, thereby validating the information in the two-dimensional code and allowing the creation 74 of the transaction. In turn, on the user device 13a side, the balance will be deducted and the required order and/or products 76 will be obtained.

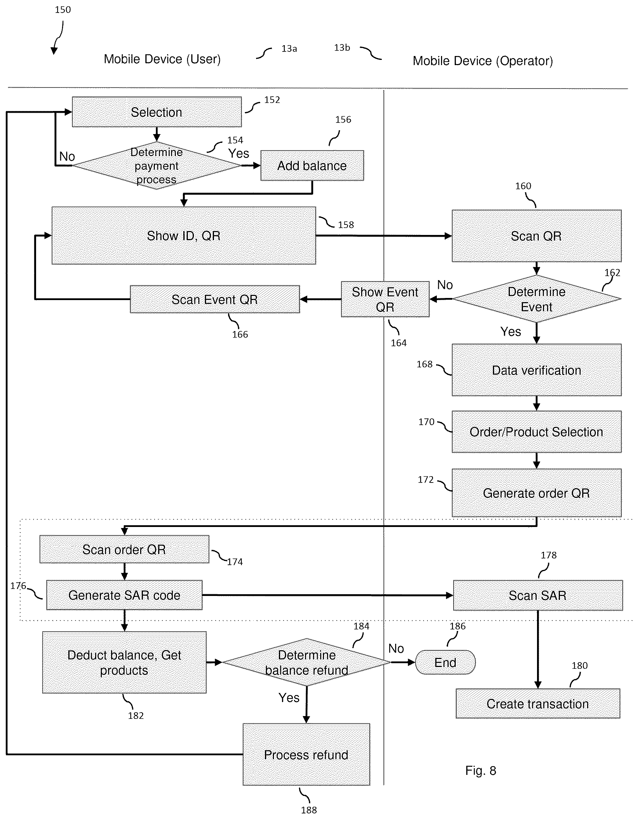

Figure 8 is a flowchart showing, for purposes of illustration, the steps of the method 150 for on-site purchase with validation of data such as age and promotions, generating and reading two-dimensional codes or media by the devices, in which a recharge with auto refund is allowed, where the validation is on the operator's side of the device 13b.

The method starts when a quantity is selected 152 on the operator device 13b and a card is added. It is then determined 154 whether the payment processing was successful, and if it is determined 154 that it was not a successful payment processing, it returns to the selection 152 of the amount and addition to card. If it is determined 154 that the payment processing has been successful, the payment is added 156 to a balance in order to generate a two-dimensional code, where the two-dimensional code includes information such as the event, balance, promotions, balance promotions, tokens, and user's personal data, such as name, gender, age, user's photograph, among other data. The two-dimensional code is displayed 158 on the screen 122 of the user device 13a. The two-dimensional code is scanned 160 by the camera 115 of the operator device 13b. Having obtained the two-dimensional code, the operator device 13b determines 162 whether it is the correct event. If it is determined 162 that it is not the correct event, the operator device 13b displays 164 on the screen 122 a two-dimensional code containing the correct event information in order for the user device 13a to scan 166 said two-dimensional code, update the information, and display 158 a two-dimensional code containing the correct user, payment, and event data. If it is determined 162 that the event is the correct event, it proceeds to verify 168 the data on the operator device 13b and, given the correct verification 168 of the data, proceeds to the selection 170 of the order or products. Once the order or products have been selected 170, a two-dimensional code is generated 172 that includes data such as the order or products selected, user data, balance, promotions, among other data. The two-dimensional code generated 172 is displayed on the screen 122 of the operator device 13b and scanned 174 by means of the camera 115 of the user device 13a. A plurality of two-dimensional codes are generated 176 on the user device 13a, which are displayed as a secure animated response (SAR) code, wherein the plurality of two-dimensional codes may be a plurality of quick response (QR) codes, wherein at least one of the two-dimensional codes includes encrypted information to be validated by the operator device 13b. After generating a plurality of two-dimensional codes 176 and displaying them on the screen 122 of the user device 13a, the generated SAR code 176 is scanned and/or read 178 by a camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting at least one valid two-dimensional code to be decrypted, thereby validating the information in the two-dimensional code and allowing the creation 180 of the transaction. In turn, on the user device 13a side, the balance will be discounted and the required order and/or products 182 will be obtained. After having deducted the balance and obtained the order and/or products 182 required, it is determined 184 if there is a remaining balance; if it is determined 184 that there is no remaining balance the process is 186 terminated. If it is determined 184 that a remaining balance exists, an amount is selected 152 and a card is added according to the start of method 150. If it is determined 184 that there is a remaining balance, a payment processor may alternatively process a refund by sending a negative charge so that it is subtracted from the recharge transactions of the previous balance.

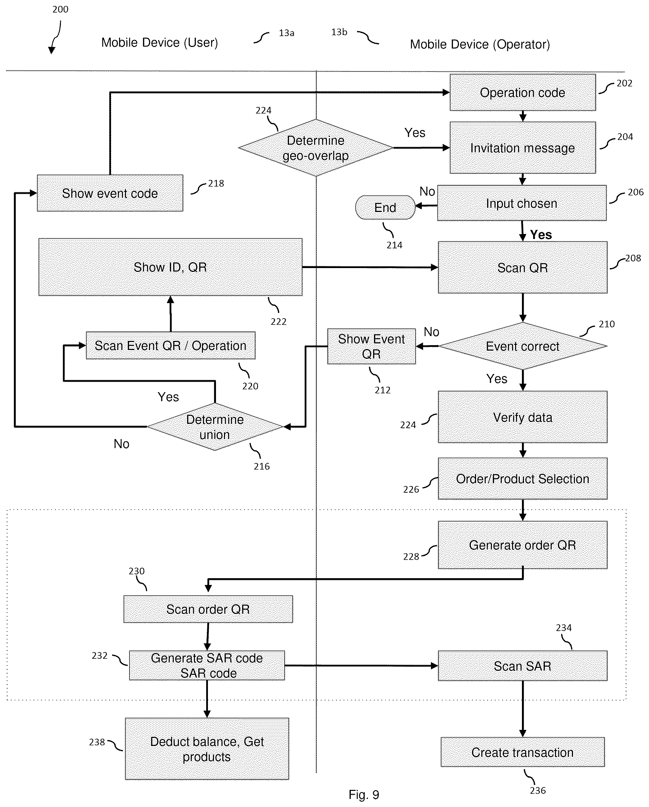

Figure 9 is a flowchart showing the steps of a method for an on-site purchase with operator-side validation and with operator input to a new event according to another preferred embodiment.

The method 200 initiates by entering 202 an operation code into the operator device 13b and, on the other hand, a geo-overlap determination datum 224, wherein it is determined 224 whether users are geo-overlapping an event. If it is determined 224 that the users are indeed geo-overlapping the event, a message 204 containing data such as fees, rules and payments may be sent on the operator device 13b. The operator, on the device 13b, may opt 206 to enter an event by accepting the terms and conditions of the event. If the operator opts 206 on the device 13b not to accept the terms and conditions of the event, the process is terminated 214. If the operator device 13b opts 206 to accept the terms and conditions of the event, then a two-dimensional code is scanned 208 with the camera 115 of the operator device 13b to determine 210 if it is the correct event. If it is determined 210 that the event is not the correct event, a two-dimensional code which includes data from the correct event is displayed on the screen 122 of the operator device 13b. The user device 13a scans said two-dimensional code and determines 216 whether or not to join the event. If it is determined 216 that the user does not want to join the event, the two-dimensional code for the event the user wants to join is displayed 218 on the screen 122 of the user device 13a so that the code can be scanned on the operator device 13b and the operator can enter 202 the operation code on the operator device 13b. If it is determined 216 that it is desired to join the event, the two-dimensional code of the event or operation is scanned 220 into the user device 13a and a two-dimensional code is displayed 222 on the screen 122 of the user device 13a, wherein said two-dimensional code includes information such as the event, the balance, promotions, balance promotions, tokens, and personal data of the user, such as name, gender, age, user's photograph, among other data. The two-dimensional code is scanned 208 with the camera 115 of the operator device 13b. If it is determined 210 that the event if the event is the correct event, it proceeds to verify 224 the data on the operator device 13b and, given the correct 224 verification of the data, proceeds to the selection 226 of the order or products. Once the order or products have been selected 226, a two-dimensional code is generated 228 that includes data such as the order or products selected, user data, balance, promotions, among other data. The two-dimensional code generated 228 is displayed on the screen 122 of the operator device 13b and scanned 230 by means of the camera 115 of the user device 13a. A plurality of two-dimensional codes are generated 232 on the user device 13a, which are displayed as a secure animated response (SAR) code, wherein the plurality of two-dimensional codes may be a plurality of quick response (QR) codes, wherein at least one of the two-dimensional codes includes encrypted information to be validated by the operator device 13b. After generating a plurality of two-dimensional codes 232 and displaying them on the screen 122 of the user device 13a, the generated SAR code 232 is scanned and/or read 234 by a camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting at least one valid two-dimensional code to be decrypted, thereby validating the information in the two-dimensional code and allowing the creation 236 of the transaction. In turn, on the user device 13a side, the balance will be discounted and the required order and/or products 238 will be obtained.

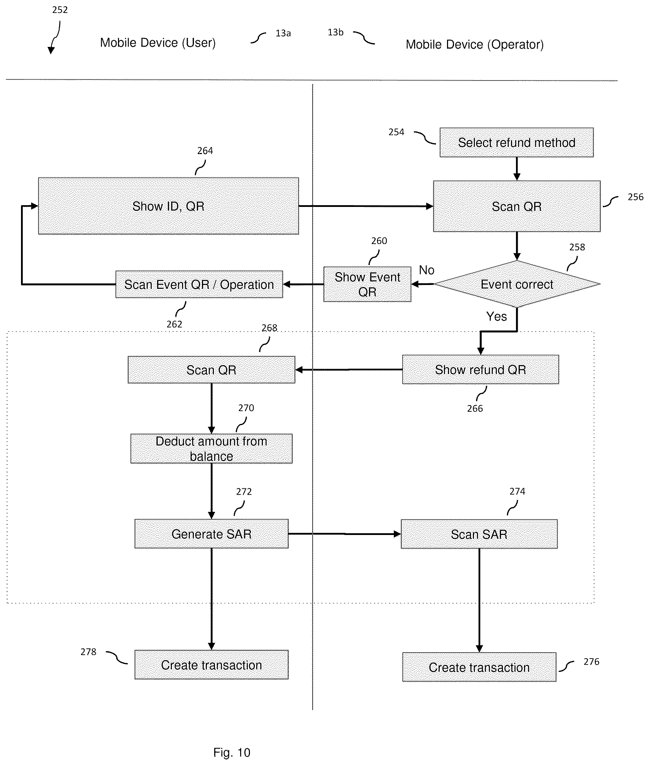

Figure 10 is a flowchart showing the steps of a method of an on-site refund with an initial validation of a two-dimensional code that includes personal identification data according to a preferred embodiment.

The method 252 starts by selecting 254 the refund method on the operator device 13b, to subsequently scan 256 a two-dimensional code on said operator device 13b. On the same operator device 13b, it is determined 258 if it is the correct event. If it is determined 258 that it is not the correct event, a two-dimensional code containing the correct event data is displayed 260 on the screen 122 of the operator device 13b, wherein said two-dimensional code is scanned 262 by means of the camera 115 of the user device 13a. A two-dimensional code 264 is displayed on the screen 122 of the user device 13a, wherein said two-dimensional code includes information such as event, balance, promotions, balance promotions, tokens, and personal data of the user, such as name, gender, age, user photograph, among other data. The two-dimensional code is scanned 256 with the camera 115 of the operator device 13b. If it is determined 258 that if it is the correct event, a two-dimensional code containing refund data is displayed 266 on the screen 122 of the operator device 13b, wherein the two-dimensional code is scanned 268 by means of the camera 115 of the user device 13a, and the amount of the total balance is removed 270 from the user device 13a. Having removed 270 the balance amount, a plurality of two-dimensional codes are generated 272 on the user device 13a, which are displayed as an animated secure response (SAR) code, wherein the plurality of two-dimensional codes may be a plurality of quick response (QR) codes, wherein at least one of the two-dimensional codes includes encrypted information to be validated by the operator device 13b. After generating a plurality of two-dimensional codes 272 and displaying them on the screen 122 of the user device 13a, the generated SAR code 272 is scanned and/or read 274 by a camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and allowing the creation 276 of a transaction. In turn, on the side of the user device 13a, a transaction is also created 278.

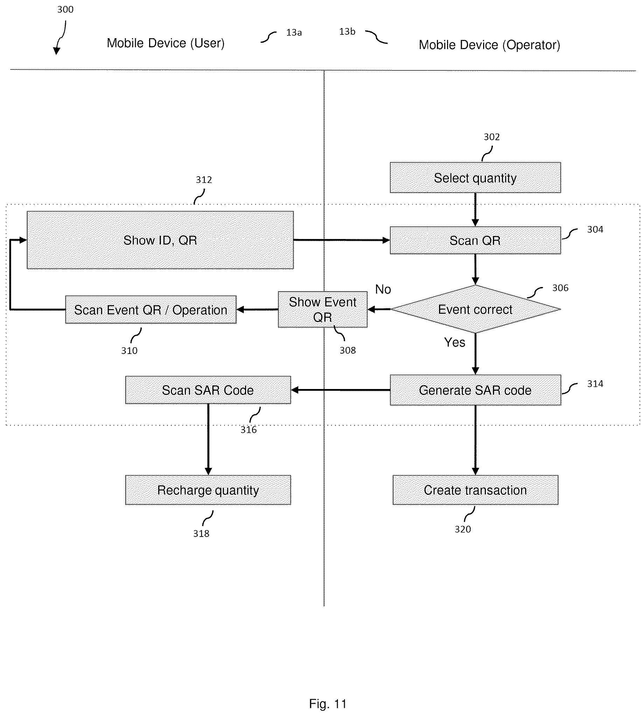

Figure 11 is a flowchart that shows the steps of an on-site recharge allowing a change of event of a preferred embodiment.

The initial method when selecting 302 an amount to be refunded on the operator device 13b. On the same operator device 13b, a two-dimensional code 304 is scanned by means of the camera 115 of said operator device 13b. It is determined 306 whether the event is the correct event on the operator device 13b; if it is determined 306 that the event is not the correct event, a two-dimensional code containing the correct event data is displayed 308 on the screen 122 of the operator device 13b, wherein said two-dimensional code is scanned 310 by means of the camera 115 of the user device 13a. A two-dimensional code 312 is displayed on the screen 122 of the user device 13a, wherein said two-dimensional code includes information such as event, balance, promotions, balance promotions, tokens, and personal data of the user, such as name, gender, age, user photograph, among other data. The two-dimensional code is scanned 304 with the camera 115 of the operator device 13b. If the event is determined to be the correct event, a plurality of two-dimensional codes are generated 314 at the operator device 13b, which are displayed as an animated secure response (SAR) code, wherein the plurality of two-dimensional codes may be a plurality of quick response (QR) codes, wherein at least one of the two-dimensional codes includes encrypted information to be validated by the user device 13a. After the plurality of two-dimensional codes are generated 314 and displayed on the screen 122 of the operator device 13b, the SAR code 314 generated is scanned and/or read 316 by means of the camera 115 of the user device 13a. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code, validating the information of the two-dimensional code, and allowing the recharging 318 of the selected quantity 302 on user device 13a. In turn, on the operator device 13b, a transaction is created 320.

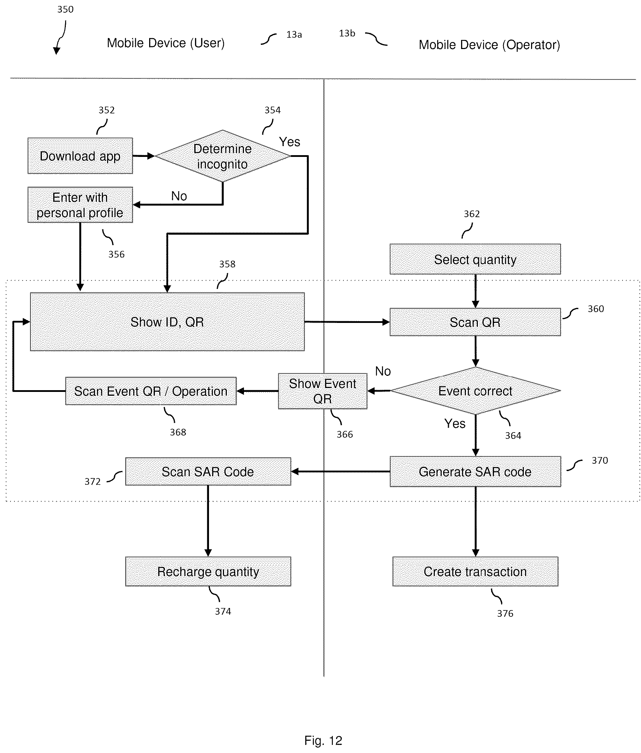

Figure 12 is a flowchart showing the steps of an on-site recharge that can be carried out in incognito mode and that allows the change of event according to another preferred embodiment.

Method 350 starts when the application is downloaded to the user device 13a. When starting the application on the user device 13a, it is determined 354 whether the user wants to continue incognito. If it is determined 354 that the user does not desire to continue incognito, the user's personal profile is entered 356 on the user device 13a to subsequently display 358 a two-dimensional code on the screen 122 of the user device 13a. If it is determined 354 that the user desires to continue incognito, the two-dimensional code is displayed 358 on the screen 122 of the user device 13a. The two-dimensional code includes information such as event, balance, promotions, balance promotions, tokens, and personal data of the user, such as name, gender, age, photograph, among others. The two-dimensional code is scanned 360 with the camera 115 of the operator device 13b. Prior to the 360 scan, the amount to be reimbursed is selected 362 on the operator device 13b. Then it is determined 364 if the event is the correct event. If it is determined 364 that the event is not the correct event, a two-dimensional code containing the correct event data is displayed 366 on the screen 122 of the operator device 13b, wherein said two-dimensional code is scanned 368 by means of the camera 115 of the user device 13a. The two-dimensional code is displayed 358 on the screen 122 of the user device 13a, wherein said two-dimensional code includes information such as the event, the balance, promotions, balance promotions, tokens, and personal data of the user, such as name, gender, age, photograph of the user, among other data. If the event is determined 364 to be the correct event, a plurality of two-dimensional codes are generated 370 at the operator device 13b, which are displayed as a secure animated response (SAR) code, wherein the plurality of two-dimensional codes may be a plurality of quick response (QR) codes, wherein at least one of the two-dimensional codes includes encrypted information to be validated by the user device 13a. After the plurality of two-dimensional codes are generated 370 and displayed on the screen 122 of the operator device 13b, the generated SAR code 314 is scanned and/or read 372 by means of the camera 115 of the user device 13a. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code, validating the information of the two-dimensional code, and allowing the recharging 374 of the selected quantity 362 on user device 13a. In turn, on the operator device 13b, a transaction is created 376.

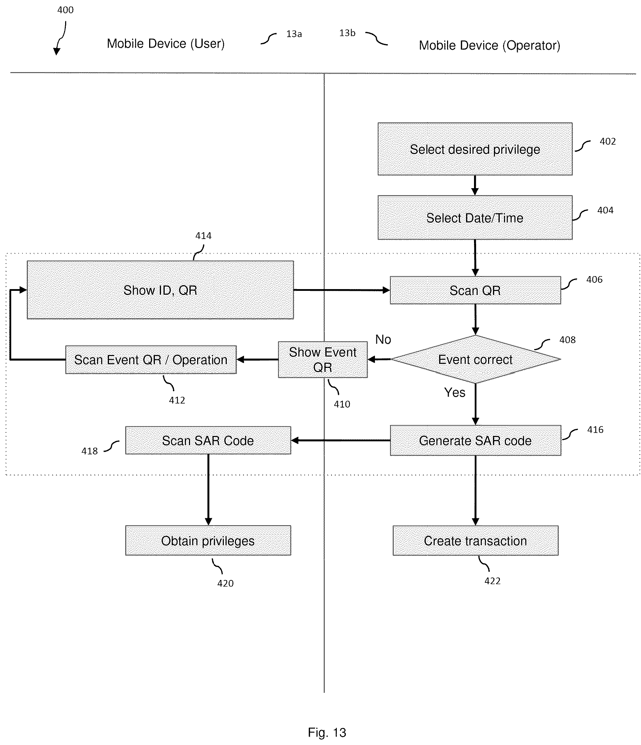

Figure 13 is a flowchart for an on-site privileged access that also allows an event change according to a preferred embodiment.

The method 400 initiates by selecting 402 a desired available access privilege, wherein the access privilege may be, among others and by way of example an assignment, a seat, a table, a room. Following the selection 402 of the privilege, the date including day and time - if applicable - available is selected 404. These selections are carried out on the operator device 13b. The operator device 13b scans 406 by means of its camera 115 a two-dimensional code in order to determine 408 whether it is the correct event. If it is determined 408 that the event is not the correct event, a two-dimensional code containing the correct event data is displayed 410 on the screen 122 of the operator device 13b, wherein said two-dimensional code is scanned 412 by means of the camera 115 of the user device 13a. A two-dimensional code 414 is displayed on the screen 122 of the user device 13a, wherein said two-dimensional code includes information such as event, balance, promotions, balance promotions, tokens, and personal data of the user, such as name, gender, age, user photograph, among other data. Said two-dimensional code displayed 414 on the screen 122 of the user device 13a is scanned 406 by the camera of the operator device 13b. If the event is determined 408 to be the correct event, a plurality of two-dimensional codes are generated 416 at the operator device 13b, which are displayed as a secure animated response (SAR) code, wherein the plurality of two-dimensional codes may be a plurality of quick response (QR) codes, wherein at least one of the two-dimensional codes includes encrypted information to be validated by the user device 13a. After the plurality of two-dimensional codes are generated 416 and displayed on the screen 122 of the operator device 13b, the generated SAR code 416 is scanned and/or read 418 by means of the camera 115 of the user device 13a. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and allowing access to the selected privileges 402 desired on the user device 13a. In turn, on the operator device 13b, a transaction is created 422.

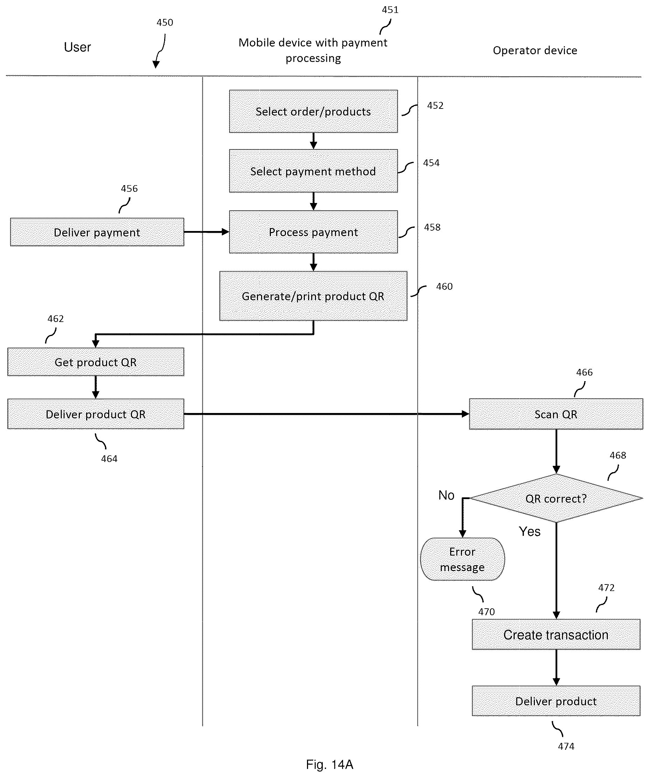

Figure 14A is a flowchart of an on-site purchase with paper tickets of a preferred embodiment.

The method 450 starts by selecting 452 an order and/or products on the device 451 with a processor capable of payment processing. On the same device 451 capable of payment processing, a payment method is selected 454 and a payment is received 456 from the user. On the device 451 capable of payment processing, the payment is processed 458 and two-dimensional codes 460 containing information including the order and/or products are generated and printed. Printed two-dimensional codes 460 are delivered to the user, who obtains 462 said printed two-dimensional codes, on a readable medium such as paper. The user delivers 464 the printed two-dimensional codes, which are scanned 466 on the operator device 13b. By scanning 466 the two-dimensional codes, the operator device 13b is able to determine 468 whether the two-dimensional codes delivered 464 by the user are correct. If it is determined 468 that the two-dimensional codes are not correct, an error message is sent 470 on the operator device 13b. If it is determined 468 that the two-dimensional codes are correct, the transaction 472 is created on the operator device 13b and the order and/or selected products 452 are delivered 474 to the user.

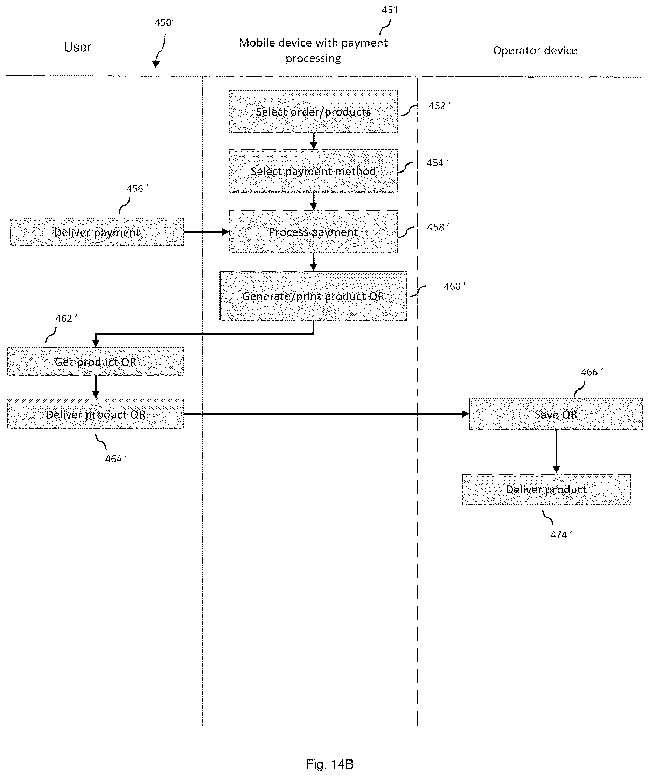

Figure 14B is a flowchart of an on-site purchase with paper tickets of another preferred embodiment.

The method 450' starts by selecting 452' an order and/or products on the device 451 with a processor capable of payment processing. On the same device 451 capable of payment processing, a payment method is selected 454' and a payment is received 456' from the user. On the device 451 capable of payment processing, the payment is processed 458' and two-dimensional codes are generated and printed 460' containing information including the order and/or products. The printed two-dimensional codes 460' are delivered to the user, who obtains 462' said printed two-dimensional codes on a readable medium such as paper. The user delivers 464' the printed two-dimensional codes, which are delivered 466' to the operator. Upon delivery 466' of the printed two-dimensional codes, the order and/or selected products 452' are delivered 474' to the user.

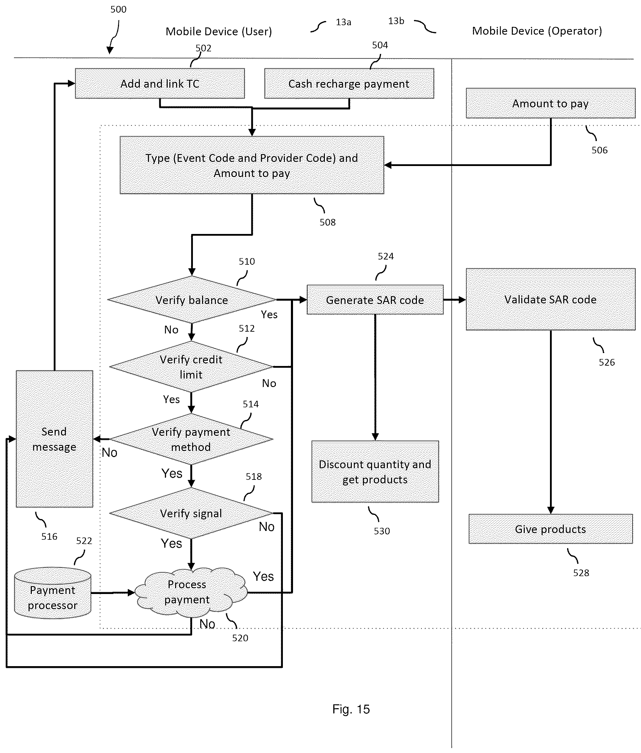

Figure 15 is a flow diagram of a closed loop while online as a secondary process, if there is no previous charge.

The method 500 starts by adding and linking 502 a card to the application or, alternatively, by making a recharge payment 504 and linking it to the user device 13a. On the other hand, either an amount to be paid is deposited 506 on the operator device 13b or the user is instructed the amount to be paid given the amount displayed on the operator device 13b, in order for the user to deposit on their mobile device 13a the amount to be paid. The amount to be paid deposited 506 in either of the two devices 13a, 13b may be transferred by a two-dimensional code, as has been described above or in the prior art, to the user device 13a, wherein said user device 13a enters 508 information, such as an event code and/or a vendor code, as well as the amount to be paid. It is determined 510 whether there is a balance on the user device 13a, and if it is determined 510 that there is no balance on the user device 13a, it is determined 512 whether there is a credit limit. If it is determined 512 that there is a credit limit, the payment method is then determined 514. If the payment method 514 cannot be determined, then an error message is sent 516 on said user device 13a and the method is started again by adding and linking 502 a card to the application. If the payment method 514 is determined, then it is determined 518 whether or not there is an Internet signal. If it is determined 518 that there is no Internet signal, then an error message is sent 516 on said user device 13a and the method is started again by adding and linking 502 a card to the application. If it is determined 518 that if there is an Internet signal, with the help of a payment processor 522, the payment 520 is processed and a SAR code is generated 524. Similarly, if it is determined 512 that there is no credit limit or it is determined 510 that there is a balance on the user device 13a, a SAR code is generated 524. The SAR generation 524 refers to generating a plurality of two-dimensional codes on the user device 13a, which are displayed as a secure animated response (SAR) code, wherein the plurality of two-dimensional codes may be a plurality of quick response (QR) codes, wherein at least one of the two-dimensional codes includes encrypted information to be validated by the operator device 13b. After the plurality of two-dimensional codes are generated 524 and displayed on the screen 122 of the user device 13a, the generated SAR code 524 is scanned and/or read by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating 526 the two-dimensional code information and creating 528 a transaction on said operator device 13b. In turn, on the user device 13a the quantity of the order and/or products obtained is deducted and the order and/or products are obtained.

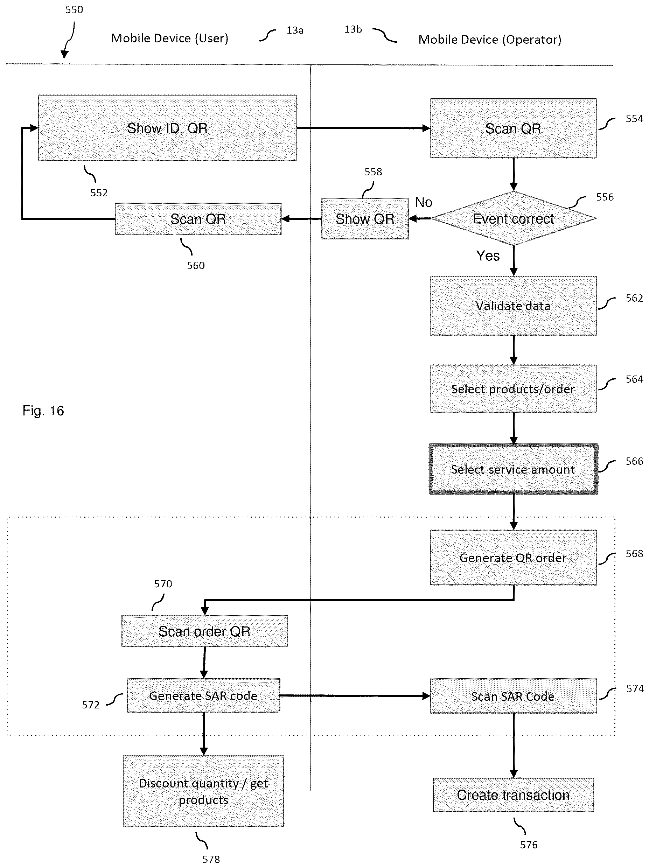

Figure 16 is a flowchart of an on-site purchase with operator-side validation with a service charge within the same validation according to a preferred embodiment.

The method 550 starts by displaying 552 a two-dimensional code on the screen 122 of the user device 13a. The two-dimensional code includes information such as event, balance, promotions, balance promotions, tokens, and personal data of the user, such as name, gender, age, photograph, among others. The two-dimensional code is scanned 554 with the camera 115 of the operator device 13b. On the operator device 13b, it is determined 556 whether the event is the correct event. If it is determined 556 that the event is not the correct event, a two-dimensional code containing the correct event data is displayed 558 on the screen 122 of the operator device 13b, wherein said two-dimensional code is scanned 560 by means of the camera 115 of the user device 13a. The two-dimensional code is displayed 552 on the screen 122 of the user device 13a with the correct event. If it is determined 556 that it is the correct event, the operator device 13b validates 562 the data and proceeds to select 564 the products and/or order, and proceeds to select 566 the amount of the service. Having selected 566 the service amount, a plurality of two-dimensional codes 568 are generated at the operator device 13b which are displayed as a secure animated response (SAR) code, wherein the plurality of two-dimensional codes may be a plurality of quick response (QR) codes, wherein at least one of the two-dimensional codes includes encrypted information to be validated by the user device 13a. After the plurality of two-dimensional codes are generated 568 and displayed on the screen 122 of the operator device 13b, the generated SAR code 568 is scanned and/or read 570 by means of the camera 115 of the user device 13a. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and allowing access to the selected products and deducting 578 the amount on the user device 13a. In turn, on the operator device 13b, a transaction is created 576.

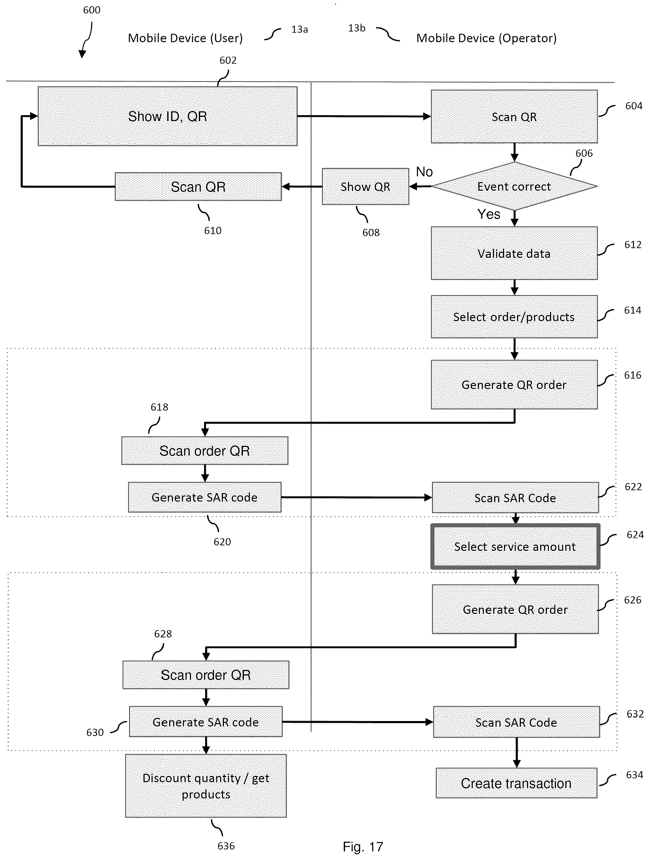

Figure 17 is a flowchart of an on-site purchase with operator-side validation with a service charge as a separate validation in accordance according to yet another preferred embodiment.

The method 600 starts by displaying 602 a two-dimensional code on the screen 122 of the user device 13a. The two-dimensional code includes information such as event, balance, promotions, balance promotions, tokens, and personal data of the user, such as name, gender, age, photograph, among others. The two-dimensional code is scanned 604 with the camera 115 of the operator device 13b. On the operator device 13b, it is determined 606 whether the event is the correct event. If it is determined 606 that the event is not the correct event, a two-dimensional code containing the correct event data is displayed 608 on the screen 122 of the operator device 13b, wherein said two-dimensional code is scanned 610 by means of the camera 115 of the user device 13a. The two-dimensional code is displayed 602 on the screen 122 of the user device 13a with the correct event. If it is determined 606 that it is the correct event, the operator device 13b validates 612 the data and proceeds to select 614 the products and/or order. Having selected 614 the products and/or the order, a two-dimensional code is generated 616 containing information including, among other data, the total of the order and/or products selected and the order and/or products selected, wherein the two-dimensional code generated 616 is displayed on the screen 122 of the operator device 13b so as to enable the user device 13a to scan 618 the two-dimensional code by means of the camera 115 of said user device 13a. Upon scanning 618 said two-dimensional code, the user device 13a generates 620 a plurality of two-dimensional codes, which are displayed as a secure animated response (SAR) code, wherein the plurality of two-dimensional codes may be a plurality of quick response (QR) codes, wherein at least one of the two-dimensional codes includes encrypted information to be validated by the user device 13a. After the plurality of two-dimensional codes are generated 620 and displayed on the screen 122 of the user device 13a, the generated SAR code 620 is scanned and/or read 622 by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting at least one valid two-dimensional code to be decrypted, thereby validating the information in the two-dimensional code. Upon validation of the two-dimensional code on the operator device 13b, the operator device 13b allows the selection 624 of a service amount, so as to subsequently generate 626 a two-dimensional code including information including, but not limited to, the total of the order and/or products selected, the order and/or products selected, and the amount of the service, wherein the generated two-dimensional code 626 is displayed on the screen 122 of the operator device 13b so as to enable the user device 13a to scan 628 the two-dimensional code via the camera 115 of said user device 13a. Upon scanning 628 said two-dimensional code, the user device 13a generates 630 a plurality of two-dimensional codes, which are displayed as a secure animated response (SAR) code, wherein the plurality of two-dimensional codes may be a plurality of quick response (QR) codes, wherein at least one of the two-dimensional codes includes encrypted information to be validated by the user device 13a. After the plurality of two-dimensional codes are generated 630 and displayed on the screen 122 of the user device 13a, the generated SAR code 630 is scanned and/or read 632 by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and thus allowing the creation 634 of the transaction on the operator device 13b. On the other hand, on the user device 13a, the quantity 636 is deducted and the order and/or selected products 614 is obtained.

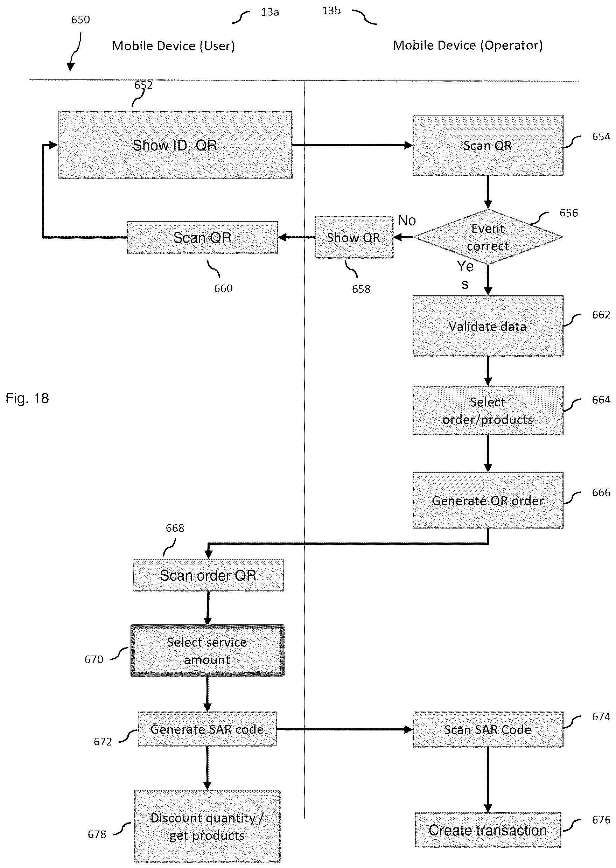

Figure 18 is a flowchart of an on-site purchase with operator-side validation with a user-side service charge according to another preferred embodiment.

The method 650 starts by displaying 652 a two-dimensional code on the screen 122 of the user device 13a. The two-dimensional code includes information such as event, balance, promotions, balance promotions, tokens, and personal data of the user, such as name, gender, age, photograph, among others. The two-dimensional code is scanned 654 with the camera 115 of the operator device 13b. On the operator device 13b, it is determined 656 whether the event is the correct event. If it is determined 656 that the event is not the correct event, a two-dimensional code containing the correct event data is displayed 658 on the screen 122 of the operator device 13b, wherein said two-dimensional code is scanned 660 by means of the camera 115 of the user device 13a. The two-dimensional code is displayed 652 on the screen 122 of the user device 13a with the correct event. If it is determined 656 that it is the correct event, the operator device 13b validates 662 the data and proceeds to select 664 the products and/or order. Having selected 664 the products and/or the order, a two-dimensional code is generated 666 containing information including, among other data, the total of the order and/or products selected and the order and/or products selected, wherein the two-dimensional code generated 666 is displayed on the screen 122 of the operator device 13b so as to enable the user device 13a to scan 668 the two-dimensional code by means of the camera 115 of said user device 13a. Upon scanning 668 said two-dimensional code, a selection 670 of a service amount is allowed on the user device 13a so as to subsequently generate 672 a two-dimensional code including information including, but not limited to, the total amount of the order and/or products selected, the order and/or products selected, and the service amount, wherein the generated two-dimensional code 672 is displayed on the screen 122 of the user device 13a so as to enable the operator device 13b to scan 674 the two-dimensional code by means of the camera 115 of said operator device 13b. By scanning 674 said two-dimensional code, the operator device 13b creates 636 the transaction and on the other hand, on the user device 13a, the amount 678 is deducted and the selected order and/or products 664 are obtained.

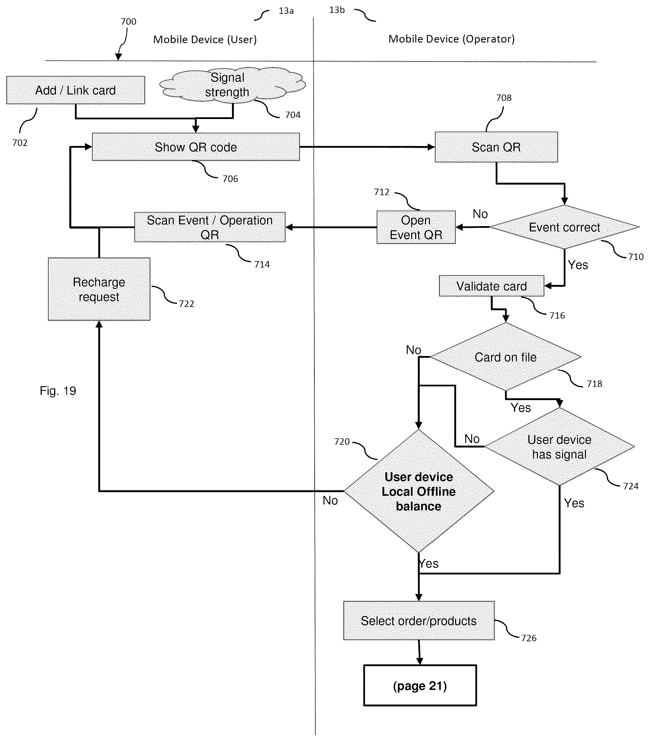

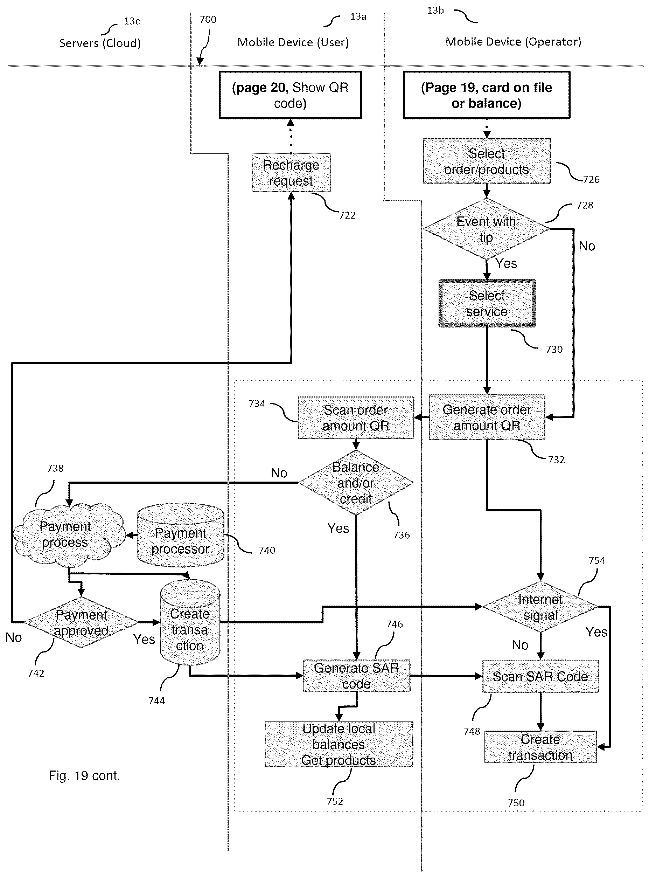

Figure 19 is a flowchart of an on-site purchase with operator-side validation while online and with a backup offline mode.

The method 700 starts with adding and/or linking a card 702 on the user device 13a and measuring the signal strength 704 of the user device 13a. Subsequently, the user device 13a displays 706 a two-dimensional code on the screen 122 of the same user device 13a itself which is scanned 708 with the camera 115 of the operator device 13b. The two-dimensional code includes information such as event, balance, promotions, balance promotions, tokens, status of the card on file, signal strength and user's personal data, such as name, gender, age, user's photograph, among other data. On the operator device 13b, it is determined 710 whether the event is the correct event. If it is determined 710 that the event is not the correct event, a two-dimensional code containing the correct event data is displayed 712 on the screen 122 of the operator device 13b, wherein said two-dimensional code is scanned 714 by means of the camera 115 of the user device 13a. The two-dimensional code is displayed 706 on the screen 122 of the user device 13a with the correct event. If it is determined 710 that it is the correct event, the operator device 13b validates 716 the data received, such as the event, the balance, promotions, balance promotions, tokens, the status of the card on file, the signal strength, and personal data of the user, such as name, gender, age, photograph of the user, among other data and proceeds to determine 718, at the operator device 13b, whether a card of the user device 13a exists on file, if it is determined 718 that a card of the user device 13a does not exist on file, it is determined 720 at the operator device 13b whether the user device 13a has a local offline balance. If it is determined 720 that the user device 13a has an offline local balance, it proceeds to request a balance recharge 722 on the user device 13a on-site and/or online with some method of payment. Upon performing the balance recharge 722, the user device 13a displays 706 the two-dimensional code on the screen 122 in order for the operator device 13b to scan 708 said two-dimensional code. If it is determined 718 that if there is a card of the user device 13a on file, it is determined 724 at the operator device 13b, whether the user device 13a has signal; if it is determined 724 that the user device 13a has no signal, then it is determined 720 whether the user device 13a has an offline local balance. If it is determined 724 that the user device 13a does have a signal or if it is determined 720 that the user device 13a does have a local offline balance, then it proceeds to select 726, on the operator device 13b, the products and/or order. Having selected 726 the products and/or the order, it is determined 728 on the operator device 13b whether or not the event has the tipping option configured. If it is determined 728 that the event does not have the tipping option configured, an order is 732 generated with a two-dimensional code. If it is determined 728 that the event has the tipping option configured, an applicable service charge is then selected 730, either as a given percentage or a specific amount, and then the order is generated 732 with a two-dimensional code. On one hand, the generation 732 of the two-dimensional code leads to the determination 754 of the internet signal of the operator device 13b. On the other hand, said two-dimensional code is displayed on the screen 122 of the operator device 13b in order for said two-dimensional code to be scanned 734 by the camera 115 of the user device 13a. It is determined 736 on user device 13a whether said user device 13a is to make payment with a balance and/or an internal credit; if it is determined 736 that said user device 13a will not make payment with a balance and/or an internal credit, then a payment process 738 is carried out at least one server 13c, wherein by means of a payment processor 740 it is determined 742 at said at least one server 13c whether or not the payment is or is not approved. If it is determined 742 on said at least one server 13c that the payment is not approved, a balance recharge 722 is required on the user device 13a on-site and/or online with some payment method. Upon performing the balance recharge 722, the user device 13a displays 706 the two-dimensional code on the screen 122 in order for the operator device 13b to scan 708 said two-dimensional code. If it is determined 742 that the payment was approved at the at least one server 13c, a transaction 744 is created at the at least one server 13c, and in parallel the internet signal 754 of the operator device 13b is verified and a plurality of two-dimensional codes 746 are generated at the user device 13a. Similarly, if it is determined 736 at the user device 13a that payment is to be made with an internal balance and/or credit, a plurality of two-dimensional codes are generated 746 at the user device 13a, wherein the plurality of two-dimensional codes are displayed as a secure animated response (SAR) code, wherein the plurality of two-dimensional codes may be a plurality of quick response (QR) codes, wherein at least one of the two-dimensional codes includes encrypted information to be validated by the operator device 13b. After the plurality of two-dimensional codes are generated 746 and displayed on the screen 122 of the user device 13a, the generated SAR code 746 is scanned and/or read 748 by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and thus allowing the creation 750 of the transaction on the operator device 13b. At the same time, the user device 13a allows updating local balances and obtaining 752 the products. If, from the verification of the internet signal 754 of the operator device, it is determined that said operator device 13b has no internet signal, said generated SAR code 746 is scanned by the user device 13a and the transaction is created 750 thereafter. If, from the verification of the internet signal 754 of the operator device, it is determined that the operator device 13b has an internet signal, the transaction 750 is created.

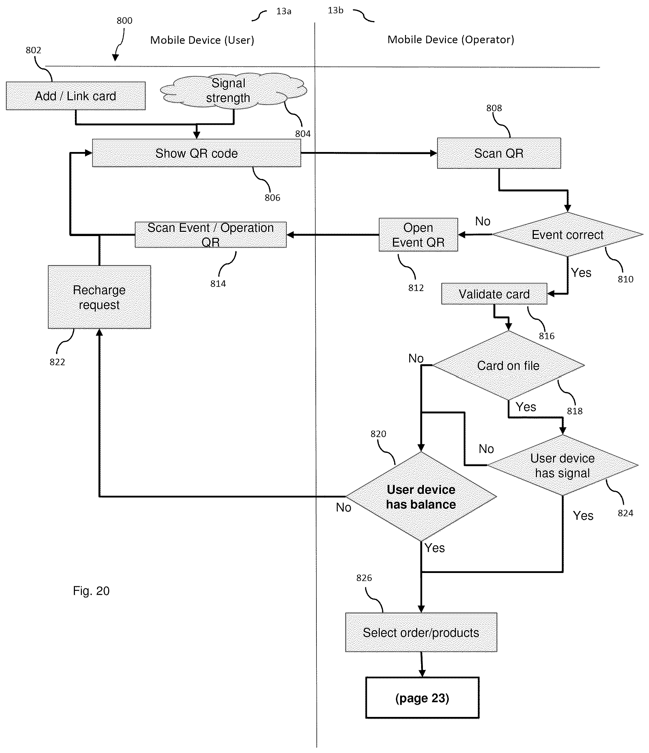

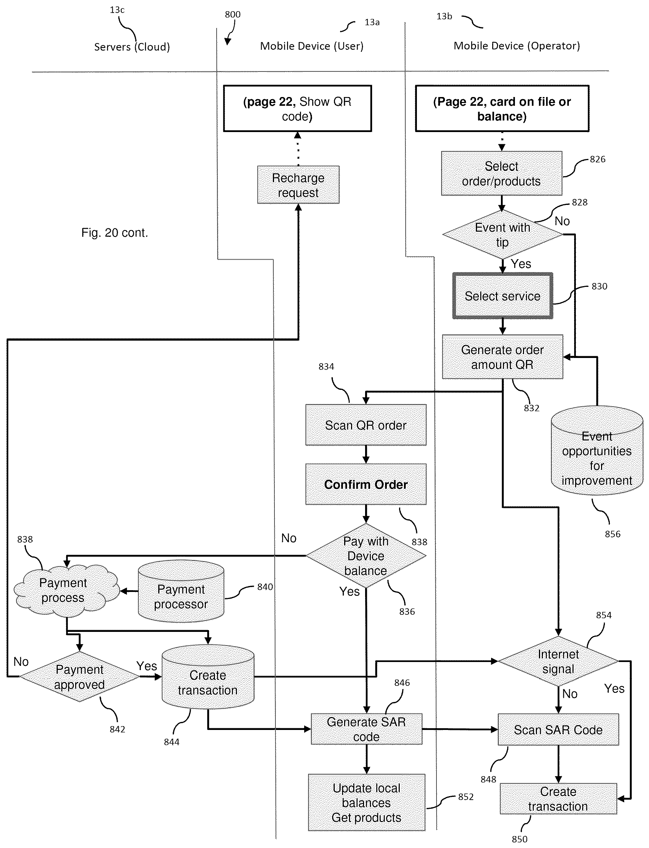

Figure 20 is a flowchart of an on-site purchase with operator-side validation while online and with a backup offline mode, where improvement opportunities are enabled for an event.

The method 800 starts with adding and/or linking a card 802 on the user device 13a and measuring the signal strength 804 of the user device 13a. Subsequently, the user device 13a displays 806 a two-dimensional code on the screen 122 of the user device 13a of the same user, which is scanned 808 with the camera 115 of the operator device 13b. The two-dimensional code includes information such as event, balance, promotions, balance promotions, tokens, status of the card on file, signal strength and user's personal data, such as name, gender, age, user's photograph, among other data. On the operator device 13b, it is determined 810 whether the event is the correct event. If it is determined 810 that the event is not the correct event, a two-dimensional code containing the correct event data is displayed 812 on the screen 122 of the operator device 13b, wherein said two-dimensional code is scanned 814 by means of the camera 115 of the user device 13a. The two-dimensional code is displayed 806 on the screen 122 of the user device 13a with the correct event. If it is determined 810 that it is the correct event, the operator device 13b validates 816 the data received, such as the event, the balance, promotions, balance promotions, tokens, the status of the card on file, the signal strength, and personal data of the user, such as name, gender, age, photograph of the user, among other data and proceeds to determine 818, at the operator device 13b, whether a card of the user device 13a exists on file, if it is determined 818 that a card of the user device 13a does not exist on file, it is determined 820 at the operator device 13b whether the user device 13a has a local offline balance. If it is determined 820 that the user device 13a has an offline local balance, it proceeds to request a balance recharge 822 on the user device 13a on-site and/or online with some method of payment. Upon performing the balance recharge 822, the user device 13a displays 806 the two-dimensional code on the screen 122 in order for the operator device 13b to scan 808 said two-dimensional code. If it is determined 818 that if there is a card of the user device 13a on file, it is determined 824 at the operator device 13b, whether the user device 13a has signal; if it is determined 824 that the user device 13a has no signal, then it is determined 820 whether the user device 13a has an offline local balance. If it is determined 824 that the user device 13a does have a signal or if it is determined 820 that the user device 13a does have a local offline balance, then it proceeds to select 826, on the operator device 13b, the products and/or order. Having selected 826 the products and/or the order, it is determined 828 on the operator device 13b whether or not the event has the tipping option configured. If it is determined 828 that the event does not have the tipping option configured, an order is 832 generated with a two-dimensional code. If it is determined 828 that the event has the tipping option configured, an applicable service charge is then selected 830, either as a given percentage or a specific amount, and then the order is generated 832 with a two-dimensional code. In the generation 832 of the two-dimensional code, suggestions 856 for improving the event experience for the user 13a are included, wherein the suggestions 856 are stored on the operator device 13b or in an at least one server 13c. On one hand, the generation 832 of the two-dimensional code leads to the determination 854 of the internet signal of the operator device 13b. On the other hand, said two-dimensional code is displayed on the screen 122 of the operator device 13b in order for said two-dimensional code to be scanned 834 by the camera 115 of the user device 13a. The order, in view of the suggestions 856 made, is confirmed 838 at the user device 13a to subsequently determine 836 at the user device 13a whether said user device 13a is to make the payment with a balance and/or an internal credit. If it is determined 836 that said user device 13a is not going to make the payment with a balance and/or internal credit, then a payment process 838 is carried out on at least one server 13c, wherein by means of a payment processor 840 on said at least one server 13c it is determined 842 whether or not the payment is or is not approved. If it is determined 842 on said at least one server 13c that the payment is not approved, a balance recharge 822 is required on the user device 13a on-site and/or online with some payment method. Upon performing the balance recharge 822, the user device 13a displays 806 the two-dimensional code on the screen 122 in order for the operator device 13b to scan 808 said two-dimensional code. If it is determined 842 that the payment was approved at the at least one server 13c, a transaction 844 is created at the at least one server 13c, and in parallel the internet signal 854 of the operator device 13b is verified and a plurality of two-dimensional codes 846 are generated at the user device 13a. Similarly, if it is determined 836 at the user device 13a that payment is to be made with an internal balance and/or credit, a plurality of two-dimensional codes are generated 846 at the user device 13a, wherein the plurality of two-dimensional codes are displayed as a secure animated response (SAR) code, wherein the plurality of two-dimensional codes may be a plurality of quick response (QR) codes, wherein at least one of the two-dimensional codes includes encrypted information to be validated by the operator device 13b. After the plurality of two-dimensional codes are generated 846 and displayed on the screen 122 of the user device 13a, the generated SAR code 846 is scanned and/or read 848 by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and thus allowing the creation 850 of the transaction on the operator device 13b. At the same time, the user device 13a allows updating local balances and obtaining 852 the products. If, from the verification of the internet signal 854 of the operator device, it is determined that said operator device 13b has no internet signal, said generated SAR code 846 is scanned by the user device 13a and the transaction is created 850 thereafter. If, from the verification of the internet signal 854 of the operator device, it is determined that the operator device 13b has an internet signal, the transaction 850 is created.

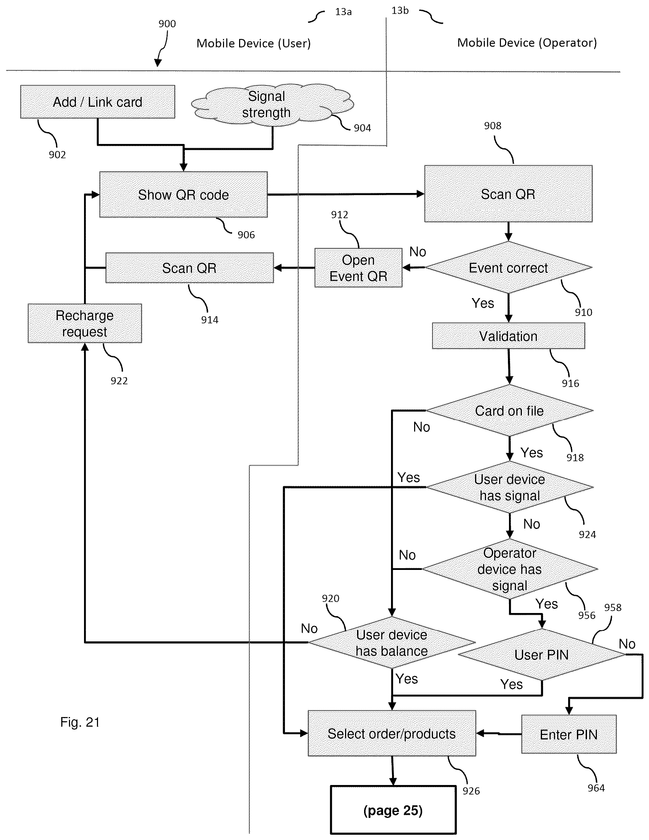

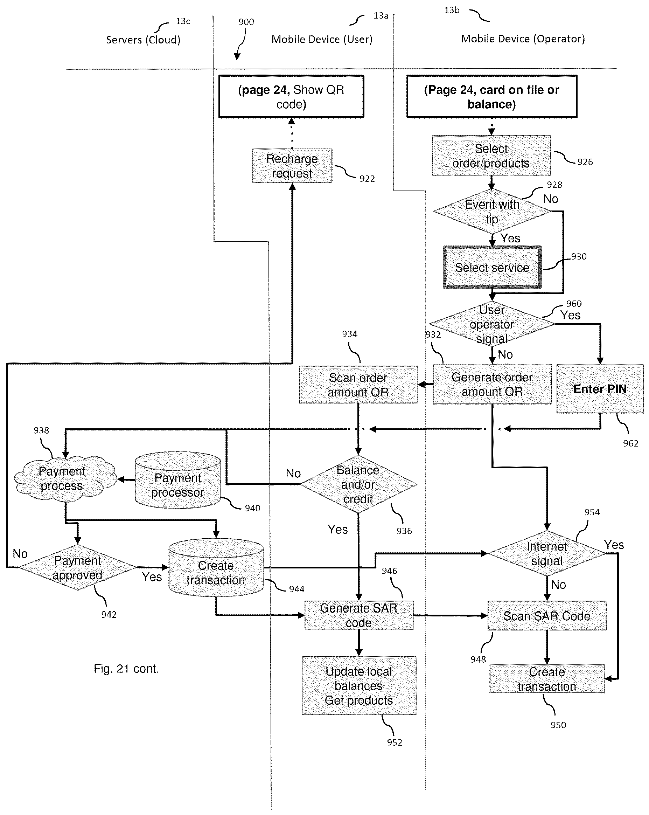

Figure 21 is a flowchart of an on-site purchase with operator-side validation while online and with a backup offline mode, where skipping the recharge with operator signal leverage is enabled.

The method 900 starts with adding and/or linking a card 902 on the user device 13a and measuring the signal strength 904 of the user device 13a. Subsequently, the user device 13a displays 906 a two-dimensional code on the screen 122 of the same user device 13a which is scanned 908 with the camera 115 of the operator device 13b. The two-dimensional code includes information such as event, balance, promotions, balance promotions, tokens, status of the card on file, signal strength and user's personal data, such as name, gender, age, user's photograph, among other data. On the operator device 13b, it is determined 910 whether the event is the correct event. If it is determined 910 that the event is not the correct event, a two-dimensional code containing the correct event data is displayed 912 on the screen 122 of the operator device 13b, wherein said two-dimensional code is scanned 914 by means of the camera 115 of the user device 13a. The two-dimensional code is displayed 906 on the screen 122 of the user device 13a with the correct event. If it is determined 910 that it is the correct event, the operator device 13b validates 916 the data received, such as the event, the balance, promotions, balance promotions, tokens, the status of the card on file, the signal strength, and personal data of the user, such as name, gender, age, photograph of the user, among other data and proceeds to determine 918, at the operator device 13b, whether a card of the user device 13a exists on file, if it is determined 918 that a card of the user device 13a does not exist on file, it is determined 920 at the operator device 13b whether the user device 13a has a local offline balance. If it is determined 920 that the user device 13a has an offline local balance, it proceeds to request a balance recharge 922 on the user device 13a on-site and/or online with some method of payment. Upon performing the balance recharge 922, the user device 13a displays 906 the two-dimensional code on the screen 122 in order for the operator device 13b to scan 908 said two-dimensional code. If it is determined 918 that a card of user device 13a exists on file, it is determined 924 at the operator device 13b whether the user device 13a has a signal. If it is determined 924 that the user device 13a has no signal, then it is determined 956 whether the operator device 13b has a signal. If it is determined 956 that the operator device 13b has no signal, then it is determined 920 whether the user device 13a has a local balance. If it is determined 956 that the operator device 13b has a signal, it is determined 958 whether the user has a PIN configured. If it is determined 958 that the user does not have a PIN configured, the user is required, preferably on a one-time basis, to enter his or her PIN. If it is determined 956 that the operator device 13b has no signal then it is determined 920, at operator device 13b, whether the user device 13a has an offline local balance. If it is determined 924 that the user device 13a does have a signal or if it is determined 920 that the user device 13a does have a local offline balance, or it is determined 958 that the user does have a PIN, then it proceeds to select 926 the products and/or the order on the operator device 13b. The products and/or the order are also selected 926 if the PIN entered 964 by the user on the operator device 13b is correct. Having selected 926 the products and/or the order, it is determined 928 on the operator device 13b whether or not the event has the tipping option configured. If it is determined 928 that the event does not have the tipping option configured, it is determined 960 whether it will use the signal from operator device 13b. If it is determined 928 that the tipping option is configured in the event, an applicable service charge is selected 930, either as a percentage or a specific amount, then determining 960 if the operator device 13b signal is to be used. If it is determined 960 that if the signal from the operator device 13b is to be used, the user, at the operator device 13b the PIN 962 is entered in order to confirm the order and subsequently process the payment 938 on at least one server 13c. If it is determined 960 that the signal from the operator device 13b is not to be used, the order is generated 932 with a two-dimensional code. On the one hand, generating 932 the command with a two-dimensional code proceeds to determining 954 the internet signal of the operator device 13b. On the other hand, generating 932 the command with a two-dimensional code on the operator device 13b, displays said two-dimensional code on the screen 122 of the operator device 13b, in order for said two-dimensional code to be scanned 934 by the camera 115 of the user device 13a. It is determined 936 at user device 13a whether said user device 13a is to make payment with a balance and/or an internal credit; if it is determined 936 that said user device 13a will not make payment with a balance and/or an internal credit, then a payment process 938 is carried out at least one server 13c, wherein by means of a payment processor 940 it is determined 942 at said at least one server 13c whether or not the payment is or is not approved. If it is determined 942 on said at least one server 13c that the payment is not approved, a balance recharge 922 is required on the user device 13a on-site and/or online with some payment method. Upon performing the balance recharge 922, the user device 13a displays 906 the two-dimensional code on the screen 122 in order for the operator device 13b to scan 908 said two-dimensional code. If it is determined 942 that the payment was approved at the at least one server 13c, a transaction 944 is created at the at least one server 13c, and in parallel the internet signal 954 of the operator device 13b is verified and a plurality of two-dimensional codes are generated 946 on the user device 13a. Likewise, if it is determined 936 at the user device 13a that payment is to be made with an internal balance and/or credit, a plurality of two-dimensional codes are generated 946 at the user device 13a, wherein the plurality of two-dimensional codes are displayed as a secure animated response (SAR) code, wherein the plurality of two-dimensional codes may be a plurality of quick response (QR) codes, wherein at least one of the two-dimensional codes includes encrypted information to be validated by the operator device 13b. After the plurality of two-dimensional codes are generated 946 and displayed on the screen 122 of the user device 13a, the generated SAR code 946 is scanned and/or read 948 by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and thus allowing the creation 950 of the transaction on the operator device 13b. At the same time, the user device 13a allows updating local balances and obtaining 952 the products. If, from the verification of the internet signal 954 of the operator device, it is determined that said operator device 13b has no internet signal, said generated SAR code 946 is scanned by the user device 13a and the transaction is created 950 thereafter. If, from the verification of the internet signal 954 of the operator device, it is determined that the operator device 13b has an internet signal, the transaction 950 is created.

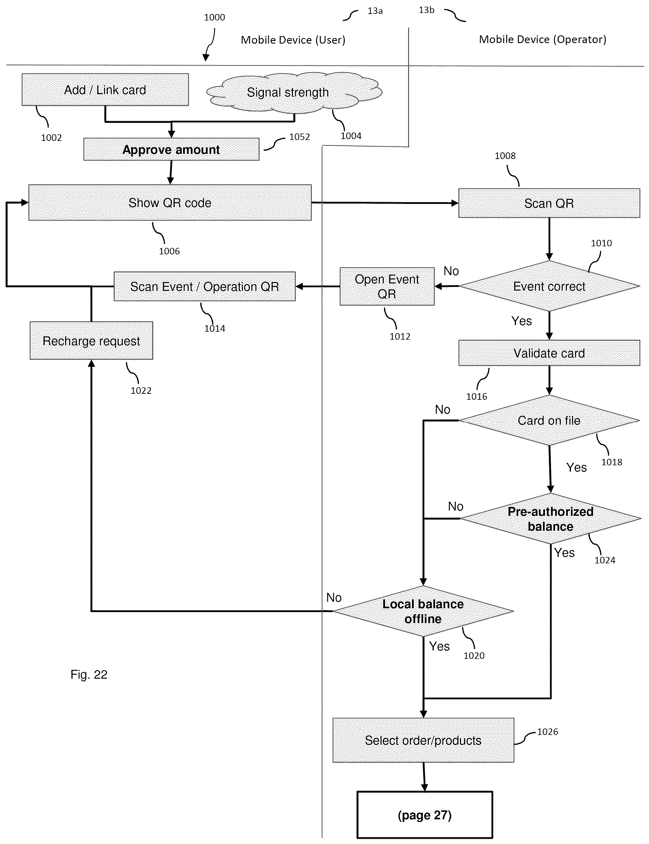

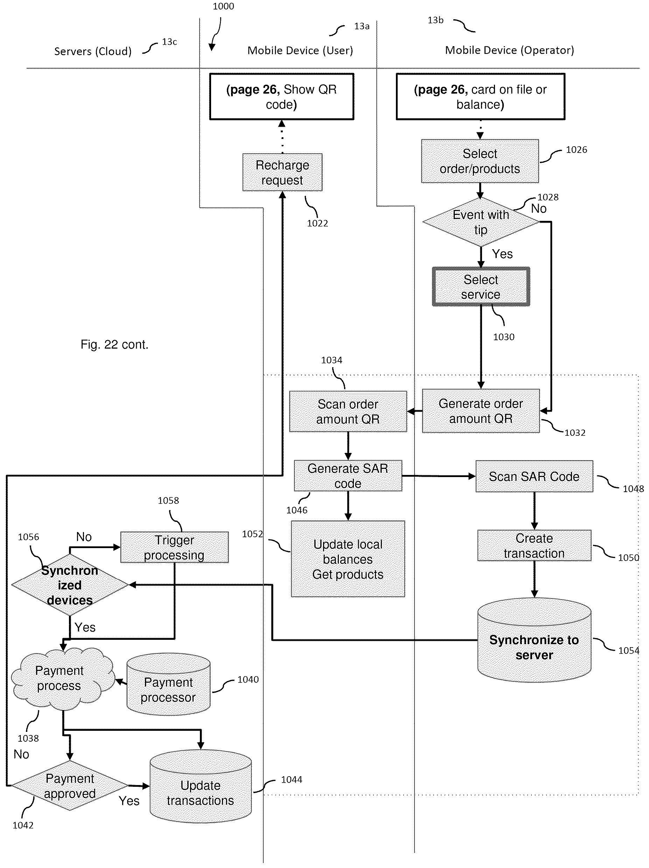

Figure 22 is a flowchart of an on-site purchase with operator-side validation while being online and with an offline backup mode, where a pre-authorized balance is included.

The method 1000 starts with adding and/or linking a card 1002 on the user device 13a and measuring the signal strength 1004 of the user device 13a. Subsequently, a preauthorized amount is approved 1052 on the user device 13a. A two-dimensional code is displayed 1006 on the screen 122 of the user device 13a itself, which is scanned 1008 with the camera 115 of the operator device 13b. The two-dimensional code includes information such as event, balance, promotions, balance promotions, tokens, status of the card on file, signal strength and user's personal data, such as name, gender, age, user's photograph, among other data. On the operator device 13b, it is determined 1010 whether the event is the correct event. **If** it is determined 1010 that the event is not the correct event, a two-dimensional code containing the correct event data is displayed 1012 on the screen 122 of the operator device 13b, wherein said two-dimensional code is scanned 1014 by means of the camera 115 of the user device 13a. The two-dimensional code is displayed 1006 on the screen 122 of the user device 13a with the correct event. If it is determined 1010 that it is the correct event, the operator device 13b validates 1016 the data received, such as the event, the balance, promotions, balance promotions, tokens, the status of the card on file, the signal strength, and personal data of the user, such as name, gender, age, photograph of the user, among other data and proceeds to determine 1018, at the operator device 13b, whether a card of the user device 13a exists on file, if it is determined 1018 that a card of the user device 13a does not exist on file, it is determined 1020 at the operator device 13b whether the user device 13a has a local offline balance. If it is determined 1020 that the user device 13a has an offline local balance, it proceeds to request a balance recharge 1022 on the user device 13a on-site and/or online with some method of payment. Upon performing the balance recharge 1022, the user device 13a displays 1006 the two-dimensional code on the screen 122 in order for the operator device 13b to scan 1008 said two-dimensional code. If it is determined 1018 that if there is a card of the user device 13a on file, it is determined 1024, at the operator device 13b, whether the user device 13a has a pre-authorized balance; if it is determined 1024 that the user device 13a does not have a pre-authorized balance, then it is determined 1020 whether the user device 13a has a local offline balance. If it is determined 1024 that the user device 13a does have a pre-authorized balance or if it is determined 1020 that the user device 13a does have a local offline balance, then the products and/or order are selected 1026 on the operator device 13b. Having selected 1026 the products and/or the order, it is determined 1028 on the operator device 13b whether or not the event has the tipping option configured. If it is determined 1028 that the event does not have the tipping option configured, an order is 1032 generated with a two-dimensional code. If it is determined 1028 that the event has the tipping option configured, an applicable service charge is then selected 1030, either as a given percentage or a specific amount, and then the order is generated 1032 with a two-dimensional code. Generating 1032 the command with a two-dimensional code displays said two-dimensional code on the screen 122 of the operator device 13b in order for said two-dimensional code to be scanned 1034 by the camera 115 of the user device 13a, to then generate 1046 the plurality of two-dimensional codes on the user device 13a, wherein the plurality of two-dimensional codes are displayed as an animated secure response (SAR) code, wherein the plurality of two-dimensional codes may be a plurality of quick response (QR) codes, wherein at least one of the two-dimensional codes includes encrypted information to be validated by the operator device 13b. After the plurality of two-dimensional codes are generated 1046 and displayed on the screen 122 of the user device 13a, the SAR code generated 1046 is scanned and/or read 1048 by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and thus allowing the creation 1050 of the transaction on the operator device 13b. At the same time, the user device 13a allows updating local balances and obtaining 1052 the products. Upon creation of the transaction 1050 on the operator device 13b, the transaction is synchronized 1054 with the server, wherein on the at least one server 13c it is determined 1056 whether the devices (13a, 13b, 13c) are synchronized. If it is determined 1056 that the devices are not synchronized, a manual process for synchronization of the devices is triggered 1058 and thereby a payment process 1038 is performed on at least one server 13c. Likewise, if it is determined 1056 that the devices are synchronized, payment processing 1038 is performed on the at least one server 13c wherein by means of a payment processor 1040 on said at least one server 13c it is determined 1042 whether or not the payment is approved. If it is determined 1042 on said at least one server 13c that the payment is not approved, a balance recharge 1022 is required on the user device 13a on-site and/or online with some payment method. Upon performing the balance recharge 1022, the user device 13a displays 1006 the two-dimensional code on the screen 122 in order for the operator device 13b to scan 1008 said two-dimensional code. If it is determined 1042 that the payment was approved on the at least one server 13c, the transactions are updated 1044 on the at least one server 13c.

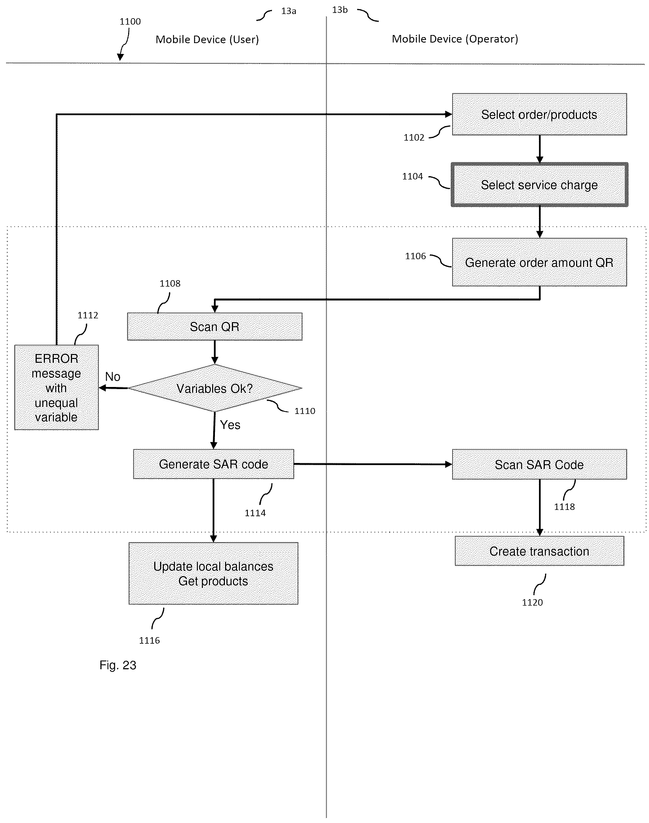

Figure 23 is a flowchart of an on-site purchase without a two-dimensional user code, applicable only when the user generates a SAR code.

The method 1100 begins by selecting 1102 an order and/or products at the operator device 13b, then selecting 1104 an applicable service charge, either as a percentage or a specific amount, then proceeding to generate 1106 the order with a two-dimensional code. The two-dimensional code is displayed on the screen 122 of the operator device 13b, in order for said two-dimensional code to be scanned 1108 by the camera 115 of the user device 13a. The two-dimensional code includes information such as event, balance, promotions, balance promotions, tokens, status of the card on file, signal strength and user's personal data, such as name, gender, age, user's photograph, among other data. It is then determined 1110 whether the variables included in the two-dimensional code are correct; if it is determined 1110 that the variables are incorrect, then an error is launched 1112 since the variables are unequal, starting a new order, selecting 1102 in such a way the order and/or products on the operator device 13b. If it is determined 1110 that the variables are correct, then a plurality of two-dimensional codes are generated 1114 on the user device 13a, wherein the plurality of two-dimensional codes are displayed as a secure animated response (SAR) code, wherein the plurality of two-dimensional codes may be a plurality of quick response (QR) codes, wherein at least one of the two-dimensional codes includes encrypted information to be validated by the operator device 13b. After the plurality of two-dimensional codes are generated 1114 and displayed on the screen 122 of the user device 13a, the SAR code generated 1114 is scanned and/or read 1118 by means of the camera 115 of the operator device 13b. By means of the two-dimensional code reader service, the method is able to read all the two-dimensional codes provided in the SAR code and to distinguish at least one valid two-dimensional code which must be decrypted. The decryption service is capable of decrypting the at least one valid two-dimensional code to be decrypted, thereby validating the two-dimensional code information and thus allowing the creation 1120 of the transaction on the operator device 13b. In turn, by generating 1114 the plurality of two-dimensional codes on the user device 13a, the balances are updated on the user device 13a, allowing the user to obtain the products.

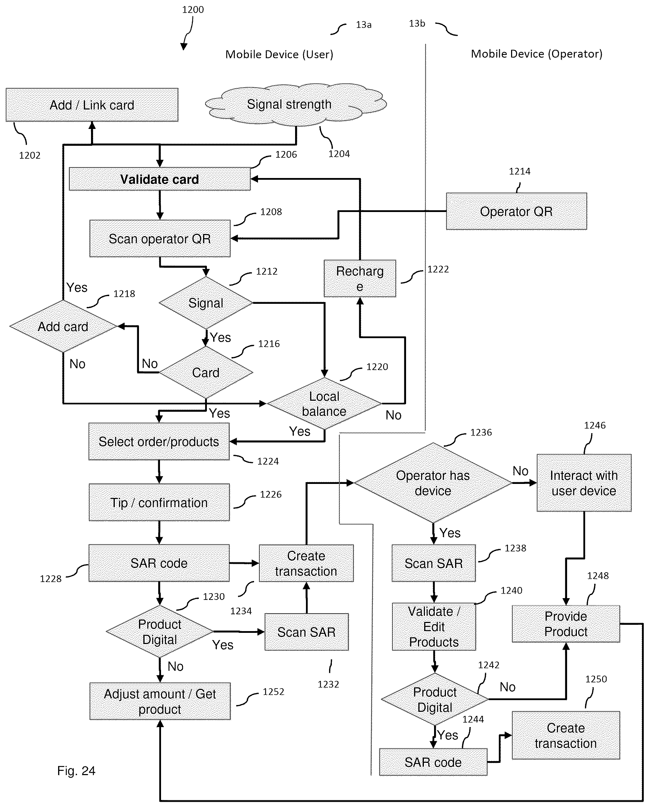

Figure 24 is a flowchart of a purchase with user-side validation, with backup offline mode and where the operator may not have a device.

The method 1200 starts with adding and/or linking a card 1202 on the user device 13a and measuring the signal strength 1204 of the user device 13a. Subsequently, the stored card is validated 1206, as well as the signal strength, balance, promotions, balance promotions, tokens, the status of the card on file, the signal strength and the user's personal data, such as name, gender, age, user's photograph, among other data. The two-dimensional code 1208 is scanned with operator identification provided 1214 by the operator or operator device 13b, wherein the two-dimensional operator code includes data such as the event code, operator code and/or a PIN linked to data such as operator name, operator products, tokens, balance promotions, among other data. It is determined 1212 whether the user device 13a has a signal, and if it is determined 1212 that the device does have a signal, then it is determined 1216 whether the user device 13a has a card stored in the memory. If it is determined 1216 that there is no card stored in the memory of the user device 13a, then it is determined 1218 whether the user has a card to be added on the user device 13a, and in the event that it is determined 1218 that there is a card to be added, adding and/or linking a card 1202 on the user device 13a is allowed. If it is determined 1212 that there is no signal at the user device 13a, or if it is determined 1218 that there is no card to be added, then it is determined 1220 if there is a local balance at the user device 13a. If it is determined 1220 that there is no local balance, recharging 1222 of the balance is allowed, with methods known in the prior art such as those described in Mexican Patent Application No. MX/a/2020/005559 of the same applicant. By allowing the recharge 1222 of a balance, it is allowed to subsequently validate 1206 the stored card. If it is determined 1220 that if there is a local balance or if it is determined 1216 that if there is a card stored in the memory of the user device 13a, selection 1224 of an order or products is allowed on the user device 13a, possibly with the selection 1226 of tips if the tipping option exists, whereby if it exists, one proceeds to select an applicable service charge, either as a percentage or a specific amount, and then proceeds to generate 1228 the order with a plurality of two-dimensional codes on the user device 13a. The plurality of two-dimensional codes comprises information such as the name of the operator and a time stamp referring to the transaction. It may also include information such as the balance to be refunded, ticket information if any, tokens or event benefits. On the one hand, generating 1228 the plurality of two-dimensional codes proceeds to determining 1230 on the user device 13a whether the product or order is digital. If it is determined 1230 that the product or order are digital, a plurality of two-dimensional codes are scanned 1232. On the other hand, upon generating 1228 the plurality of two-dimensional codes, or upon scanning 1232 the plurality of two-dimensional codes, a transaction is created 1234 on the user device 13a.

Subsequently, is determined 1236 if the operator has a device 13b. If it is determined 1236 that the operator does have an operator device 13b, it scans 1238, on the operator device 13b, the plurality of two-dimensional codes arriving from the user device 13a, validates and/or edits 1240 the products or order on the operator device 13b, and determines 1242 whether the products or order are digital. If it is determined 1242 that the products or order are digital, a plurality of two-dimensional codes are generated 1244 on the operator device 13b and the transaction 1250 is created on the operator device 13b. If it is determined 1236 that the operator does not have an operator device 13b, then the operator is allowed to interact 1246 with the user device 13a and the product and/or order is provided 1248. Similarly, if it is determined 1242 that the products or order are not digital, then the product and/or order is provided 1248. By providing 1248 the product and/or order and determining 1230 on the user device 13a that the product and/or order are not digital, the amount stored in the memory of the user device 13a is adjusted 1252, and the product is obtained.

Unless previously defined herein, the terms and expressions used herein should be understood in the normal sense given to these terms and expressions with respect to the respective areas of study thereof, except, as mentioned above, in those defined above. Relationship terms such as above, below, first, second, and the like can only be used to distinguish one entity or action from another, without the need to necessarily imply such a current relationship or request between such entities or actions. The terms "comprises", "includes" "contains" or any other variant thereof are intended to make a non-exclusive inclusion such that a process, method, article, system, device or product comprising a list of elements not only includes those elements but may also include other elements which are not expressly listed or inherent to the process, method, article, system, device or product. The brief description of the invention is provided to acquaint the reader with the technical nature of the description. It is provided with the understanding that it will not be used to interpret or limit the scope or meaning of the claims. Furthermore, in the detailed description, several features that are grouped into various embodiments can be seen in order to give a correct understanding of the description. This way of describing should not be interpreted as reflecting an intention that the claimed embodiments require more characteristics than those expressly stated in each claim. On the contrary, as the following claims reflect, the inventive features lie in fewer than all the characteristics of a described embodiment. Therefore, the following claims are incorporated into the detailed description, with each claim cited separately as subject matter to be claimed. While some aspects have been described in the context of an device, it is evident that these aspects also represent a description of the corresponding method, where a block or device corresponds to a process step or a characteristic of a process step. Similarly, aspects described in the context of a method step represent a description of a corresponding or characteristic block or element of a corresponding device. Depending on certain requirements for implementation, the embodiments of the invention can be implemented on hardware or software. It can be implemented using a digital storage medium, e.g. a floppy disk, DVD, CD, ROM, PROM, EPROM, EEPROM or FLASH memory, containing stored electronically readable control signals, that cooperate (or are able to cooperate) with a computer programmable system such that the respective method is carried out. Some embodiments according to the invention comprise a data carrier that has electronically readable control signals, which are capable of cooperating with a computer programmable system, such as to execute one of the methods described herein. Generally, the embodiments of the present invention can be implemented as a computer program product with a program code, the program code being operational to perform one of the methods when the computer program runs on a computer. The program code may, for example, be stored on a machine-readable carrier. While the above description has been described with the best modalities and/or other examples, it is understood that various modifications may apply or can be made to it and that the subject matter described herein can be implemented in various forms and examples, and that such concepts can be carried out in different applications, some of which have been described above. The following claims are intended to claim any and all applications, modifications and variations that fall within the scope of the concepts herein.

**Claims**

1.  A method for transferring encrypted data from a first electronic device to a second electronic device, each of the electronic devices comprising a memory and a processor, the method comprising:

    reading at least one first encrypted code from the first electronic device on the second electronic device and decrypting the at least one first code with the processor and memory of the second electronic device;
generating at least one second encrypted code with the processor and memory of the second electronic device in response to the first decrypted code;
reading the at least one second encrypted code from the second electronic device on the first electronic device and decrypting the at least one second code with the processor of the first electronic device; and
generating an action on the first electronic device based on at least one second decrypted code.

2.  The method of claim 1, wherein each of the electronic devices comprises at least one of an input/output interface, the memory and the processor,

    wherein the at least one first code is an encrypted two-dimensional code that is displayed on the output interface of the first electronic device and read with the input interface of the second electronic device; and
    wherein the at least one second code is a second encrypted two-dimensional code that is displayed on the output interface of the second electronic device and read with the input interface of the first electronic device.

3.  The method of claim 2, wherein the at least one second two-dimensional code is a plurality of two-dimensional codes displayed in secure animated response video format at a rate of at least 1 every 70 ms, preferably 1 two-dimensional code every 40 ms, and wherein the at least one second two-dimensional code is not stored on the second mobile device,
    wherein the electronic devices do not have an active network connection and/or where the electronic devices do not have an active connection therebetween.

4.  The method of claim 2, wherein generating the at least one first code or the at least second encrypted two-dimensional code comprises:

    generating a dataset to be transferred that comprises a first dataset and a second dataset with a character string, the first and second datasets comprising a frame with a random and non-duplicate frame number, and a key to encrypt the data from the other dataset, the dataset to be transferred further comprising a frame number and a random string,
    encrypting the dataset to be transferred with a first public key and encrypting second data from the dataset to be transferred with a second private key, and

creating a box-tagged encrypted dataset and converting the box-tagged encrypted dataset to a processor-readable set of graphics;
wherein decrypting the at least one first code or the at least second encrypted two-dimensional code comprises
extracting all frames from the transferred two-dimensional code and removing the frame number from each dataset;
converting the frames into an encrypted dataset and decrypting the frame data with the public key;
extracting the private key and frame number set, decrypting the datasets with the private key and extracting the information data;
wherein the dataset comprises identification data of an event, a name and a unique code.

5. The method of claim 1, wherein reading and decrypting the at least one first two-dimensional code with the processor and memory of the second electronic device additionally comprises:

determining, on the first electronic device, if the event of the first code received is correct, and if the event is correct,
verifying that the data provided in the first encrypted code is correct;
selecting an order or products, and
generating the second code including data such as the order or products selected, user data, balance and promotions, among other data, on the first electronic device, and
deducting from a balance of the second electronic device and obtaining the selected products, wherein the second encrypted code includes information comprising the order or products selected and user data, among other data.

6. The method of claim 5, wherein the method additionally comprises:

selecting, on the first mobile device, an amount or adding a valid card;
determining, on the first mobile device, whether the card or amount is a valid card or amount; and
determining, on the first mobile device, if there is a remaining balance, and if there is a remaining balance

allowing to select, on the first mobile device, an amount or adding a valid card, or processing a refund by subtracting the recharge transactions from the previous balance.

7. The method of claim 1, wherein the method additionally comprises:

entering, on the second mobile device, an operation code and the determination of a geo-overlap, where the geo-overlap determines whether there are two or more first mobile devices geo-overlapping an event,
entering, on the second mobile device, the event,
wherein reading and decrypting the at least first code with the processor and memory of the second electronic device additionally comprises:

determining whether the event is the correct event; and
if the event is not the correct event, determining, on the first mobile device, whether the first mobile device joins the correct event;
if the event is the correct event, verifying that the data provided in the first encrypted code is correct; and allowing the selection of an order or products; and

wherein the second encrypted code includes information comprising the order or products selected and user data, among other data.

8. The method of claim 1, wherein the method additionally comprises:

selecting a refund method on the second mobile device;
wherein reading and decrypting the at least first code with the processor and memory of the second electronic device additionally comprises determining whether the event is the correct event; and
wherein reading and decrypting the at least second code with the processor and memory of the first electronic device additionally comprises removing an amount from a balance.

9. The method of claim 1, wherein the method additionally comprises:

selecting an amount on the second mobile device;
wherein reading and decrypting the at least first code with the processor and memory of the second electronic device further comprises determining whether the event is the correct event, and if the event is not correct, displaying on the screen a code with information of the correct event, wherein the code can be read by the first electronic device; and
wherein the action on the first electronic device on the basis of the second decrypted code comprises a refund of said amount.

**10.** The method of claim 9, wherein the method additionally comprises determining, on the first electronic device, to proceed incognito.

**11.** The method of claim 1, wherein the method additionally comprises:

selecting, on the second electronic device, a specific privilege;
selecting, on the second electronic device, an available date for the desired privilege; and
wherein reading and decrypting the at least first code with the processor and memory of the second electronic device further comprises determining whether the event is the correct event, and if the event is not correct, displaying on the screen a code with information of the correct event, wherein the code can be read by the first electronic device.

**12.** The method of claim 1, wherein reading and decrypting the at least first code with the processor and memory of the second electronic device additionally comprises:

determining if the event is the correct event, and if the event is not correct, displaying on the screen a code with information of the correct event, wherein the code can be read by the first electronic device;
wherein the method additionally comprises:

verifying that the data provided in the first encrypted code is correct;
selecting an order or products; and
generating the second code including data such as the order or products selected, user data, balance and promotions, among other data, on the first electronic device, and deducting from a balance of the second electronic device and obtaining the selected products,
wherein the second encrypted code includes information comprising the order or products selected and user data, among other data.

**13.** The method of claim 12, wherein the method further comprises selecting an amount for the service.

**14.** The method of claim 13, wherein the method additionally comprises:

generating at least one third encrypted code with the processor and the memory of the second electronic device in response to the selection of the amount for the service, and providing the reading of at least one third encrypted code by the second electronic device;
reading the at least one second encrypted code on the first electronic device and decrypting the at least one third code with the processor of the first electronic device.

**15.** The method of claim 1, wherein the method additionally comprises:

adding and/or linking a card on the first electronic device;
wherein reading and decrypting the at least first code with the processor and the memory of the second electronic device further comprises determining whether the event is the correct event, and if the event is not correct, providing the reading of a code with information of the correct event by the second electronic device, wherein the code can be read by the first electronic device;
verifying, on the second electronic device, that the data provided in the first encrypted code are correct;
determining, on the second electronic device, whether a card is linked to the first electronic device, and if it is determined that a card does not exist, determining whether the first electronic device has a local balance; if it is determined that a card exists or it is determined that a local balance does exist
selecting an order or products;
determining, on the second electronic device, whether the event is a tipping event and if so, selecting an amount for the service; and
wherein generating the second code comprises:

determining on the first electronic device whether a payment will be made with a balance and/or credit stored on the first electronic device and, if it is determined that payment will not be made with the balance and/or credit stored, processing payment on a server through a payment processor, wherein the server determines whether or not the payment is approved;
determining whether or not there is an Internet signal on the second electronic device; and
wherein the action on the first electronic device on the basis of the second decrypted code comprises updating local balances.

**16.** The method of claim 15, wherein the method additionally comprises:

showing opportunities for improving the event; and
confirming, on the first electronic device, the data included in the second code.

17. The method of claim 1, wherein the method additionally comprises:

adding and/or linking a card on the first electronic device;
wherein reading and decrypting the at least first code with the processor and the memory of the second electronic device further comprises determining whether the event is the correct event, and if the event is not correct, providing the reading of a code with information of the correct event by the second electronic device, wherein the code can be read by the first electronic device;
verifying, on the second electronic device, that the data provided in the first encrypted code are correct;
determining, on the second electronic device, whether a card linked to the first electronic device exists; if it is determined that a card does not exist, determining whether the first electronic device has a local balance;
if it is determined that a card exists, determining on the second electronic device whether the first electronic device has a signal; if it is determined that the first electronic device does not have a signal, determining whether the second electronic device has a signal; if it is determined that the second electronic device does not have a signal, determining whether the first electronic device has a local balance; if it is determined that the second electronic device does have a signal, determining whether entering a PIN is allowed;
if it is determined that a card exists or it is determined that a local balance exists or it is determined that the first electronic device has a signal or a PIN is entered or not entered, selecting an order or products;
determining, on the second electronic device, whether the event is a tipping event and, if so, selecting an amount for the service;
determining whether the second electronic device has a signal, and if the second electronic device has a signal, allowing entering a PIN on the second electronic device; and
wherein generating the second code comprises:

determining on the first electronic device whether a payment will be made with a balance and/or credit stored on the first electronic device and, if it is determined that payment will not be made with the balance and/or credit stored, processing payment on a server through a payment processor, wherein the server determines whether or not the payment is approved;

determining whether or not there is an Internet signal on the second electronic device; and
wherein the action on the first electronic device on the basis of the second decrypted code comprises updating local balances.

18. The method of claim 1, wherein the method additionally comprises:

adding and/or linking a card on the first electronic device;
wherein reading and decrypting the at least first two-dimensional code with the processor and the memory of the second electronic device further comprises determining whether the event is the correct event, and if the event is not correct, displaying on the display a code with information of the correct event, wherein the code can be read by the first electronic device;
verifying, on the second electronic device, that the data provided in the first encrypted two-dimensional code are correct;
determining, on the second electronic device, whether a card linked to the first electronic device exists; if it is determined that a card does not exist, determining whether the first electronic device has a local balance; if it is determined that a card exists, determining whether a pre-authorized balance exists; and if the preauthorized balance does not exist, determining whether the first electronic device has a local balance,
if it is determined that a preauthorized balance exists or that a local balance exists
selecting an order or products;
determining, on the second electronic device, whether the event is a tipping event and, if so, selecting an amount for the service;
wherein the action on the first electronic device on the basis of the second decrypted two-dimensional code comprises updating local balances; and
wherein the method additionally comprises:

synchronizing a server, wherein the server synchronization comprises
determining if the electronics are synchronized, and otherwise allowing the electronics to synchronize;
when the electronic devices are synchronized, processing payment on a server through a payment processor, wherein the server determines whether the payment is approved or not; and
updating the server and electronic devices.

19. A method for transferring encrypted data from a first electronic device to a second electronic device, each of the electronic devices comprising a memory and a processor, the method comprising:

selecting an order and/or products on the first electronic device;
selecting an amount for the service;
generating and providing the reading of at least one first encrypted code on the first electronic device, wherein the first encrypted code comprises the data selected;
reading the at least one first code encrypted on the second electronic device and decrypting the at least one first code with the processor and memory of the second electronic device;
determining whether the data included in the at least one first encrypted code are correct, and if so, allowing again to select on the first electronic device an order and/or products; if the data included in the at least one first encrypted code are correct,
generating at least one second encrypted code with the processor and memory of the second electronic device in response to the first decrypted code, and providing the reading of the at least one second encrypted code on the second electronic device;
reading the at least one second encrypted code on the first electronic device and decrypting the at least one second code with the processor of the first electronic device; and
generating an action on the first electronic device based on at least one second decrypted code, wherein the action on the first electronic device based on at least one second decrypted code comprises updating local balances.

20. The method of claim 19, wherein each of the electronic devices comprises at least one input/output interface, the memory and the processor,

wherein the at least one first code is an encrypted two-dimensional code that is displayed on the output interface of the first electronic device and read with the input interface of the second electronic device; and
wherein the at least one second code is a second encrypted two-dimensional code that is displayed on the output interface of the second electronic device and read with the input interface of the first electronic device.

21. A method for transferring encrypted data from a first electronic device to a second electronic device, each of the electronic devices comprising at least one input/output interface, a memory and a processor, the method comprising:

selecting an order and/or products on the first electronic device;
selecting a payment method on the first electronic device;
generating, on the basis of a processed payment, a first printed encrypted two-dimensional code comprising the selections of the first device; and
reading the first printed encrypted two-dimensional code on the second electronic device.

22. The method of claim 21, wherein the method additionally comprises determining whether the encrypted two-dimensional code is correct.

23. A method for transferring encrypted data on a first electronic device comprising a memory and a processor, the method comprising:

reading the at least one first code from a code provider on the first electronic device and decrypting the at least one first code with the processor and memory of the first electronic device;
generating at least one second encrypted code with the processor and memory of the first electronic device in response to the first decrypted code;
allowing interaction between the first electronic device and the provider of the first code; and
generating an action on the first electronic device based on at least one second decrypted code.

24. The method of claim 23, wherein the method additionally comprises:

validating, on the first electronic device, a card;
determining if the first electronic device has a signal and, if the first electronic device does not have a signal, determining if the first electronic device has a local balance;
determining if the first electronic device has a card in the memory and, if it does not have a card in the memory, determining if a card can be added;
selecting an order and/or products on the first electronic device if it is determined that there is a card in the memory, or if there is a local balance on the first electronic device;
generating, on the first electronic device, a plurality of two-dimensional codes;
determining, on the first electronic device, whether the order and/or product are digital and, if it is determined to be a digital product, scanning a plurality of two-dimensional codes and creating a transaction on the first electronic device;

determining whether a second electronic device exists and, if it is determined that a second electronic device does exist,

allowing the reading of the two-dimensional codes from the first electronic device on the second electronic device,
validating and/or editing the order and/or products on the second electronic device, and
determining, on the second electronic device, whether the order and/or products are digital, and if they are determined to be digital, generating a plurality of two-dimensional codes and creating a transaction on the second electronic device;

allowing interaction of the provider of the first two-dimensional code with the first electronic device if it is determined that a second electronic device does not exist,
wherein the action of the first electronic device is the adjustment of an amount.

25. A method for transferring encrypted data from a first electronic device to a second electronic device, each of the electronic devices comprising a memory and a processor, the method comprising:

adding and/or linking a card on the first electronic device or making a recharge payment;
entering an amount on either of the two electronic devices;
entering event data on either of the two electronic devices;
verifying, on the first electronic device, the existence of a balance of the first electronic device wherein if the existence of a balance is not verified, it is verified if there is a credit limit; and
verifying the signal of the first electronic device;
wherein if the payment method is not verified or the existence of a signal is not verified, adding and/or linking a card on the first electronic device or making a recharge payment is allowed,
wherein if the existence of a balance is verified, or the existence of a credit limit is verified or the payment is processed, at least one first encrypted code is generated and provided for reading on the first electronic device, the first encrypted code comprising the added and entered data, and wherein the at least one first encrypted code is read on the second electronic device and the at least one first code is decrypted with the processor and the memory of the second electronic device; an action is generated on the first electronic device based on at least one first decrypted code, wherein the action on the first electronic device based on at least one second decrypted code comprises deducting amounts.

26. A system for transferring encrypted data between electronic devices, the system comprising:

a first electronic device with an input/output interface, a memory and a processor;
a second electronic device with an input/output interface, a memory and a processor;
wherein the devices are configured for:

reading at least one first encrypted code from the first electronic device on the second electronic device and decrypting the at least one first code with the processor and memory of the second electronic device;
generating at least one second encrypted code with the processor and memory of the second electronic device in response to the first decrypted code;
reading the at least one second encrypted code from the second electronic device on the first electronic device and decrypting the at least one second code with the processor of the first electronic device; and
generating an action on the first electronic device based on at least one second decrypted code.

27. The system of claim 26, wherein the at least one second two-dimensional code is a plurality of two-dimensional codes displayed in secure animated response video format at a rate of at least 1 every 70 ms, preferably 1 two-dimensional code every 40 ms, wherein the at least second two-dimensional code is not stored on the second mobile device and wherein the electronic devices do not have an active network connection and/or an active connection therebetween.

28. A computer-readable non-transient medium comprising the method of claim 1 for transferring encrypted data from a first electronic device to a second electronic device.

Fig. 1

13c

115

Camera
in use

13a

122

115b

Camera
in use

13b

NFC

10

Wireless mobile
communication network

Fig. 2

15

**Simple data**

An information set
$I = \{I_1, I_2, I_3, \ldots, I_k\}$

Encryption key
$K_e$

**Generate private key,
a frame number set**

Private key
$K_{prv}$

A frame number set
$FN = \{FN_0, FN_1, FN_2, \ldots, FN_k\}$

**Generate a data set**

$S_0 = [FN_0]||[RnS]$
$S_{FN0} = [K_{prv}]||[FN_1]||[FN_2]||[FN_3]||\ldots||[FN_k]||[RnS]$
$S_{FN1} = [I_1]||[RnS],$
$S_{FN2} = [I_2]||[RnS],$
$S_{FN3} = [I_3]||[RnS],$
$\ldots \ldots \ldots \ldots \ldots$
$S_{FNk} = [I_k]||[RnS]$
$\ldots \ldots \ldots \ldots \ldots$
$S_{29} = [RnS]$

**Encrypt AES-256**

$S_{0e} = AES(S_0, K_e)$
$S_{FN0e} = AES(S_{FN0}, K_e)$
$S_{FN1e} = AES(S_{FN1}, K_{prv});$
$S_{FN2e} = AES(S_{FN2}, K_{prv});$
$\ldots \ldots \ldots \ldots \ldots$
$S_{29e} = AES(S_{29}, K_{prv});$

**Add frame number**

$S_{ke}` = [FN_k][S_{ke}], k = \{0, 1, 2, \ldots, 29\}$

**Generate a QR code set**

$S_{0e}`$

$S_{1e}`$

$\ldots \ldots \ldots$

$S_{29e}`$

**Show SAR code**

Fig. 3

**Scan SAR code**

**Extract encrypted data**

$$S = \{S_0, S_1, S_2, \ldots, S_{29}\}$$

**Remove frame number**

$$S` = \{S_0`, S_1`, S_2`, \ldots, S_{29}`\}$$

**Extract private key,
the frame number set**

Decrypt $S_0'$ with $K_e$ => $FN_0$
Decrypt $SFN_0'$ with $K_e$ => $K_{prv}, FN_1, FN_2, \ldots, FN_k$

**Extract necessary data**

$$\{SFN_1`, SFN_2`, SFN_3`, \ldots, SFN_k`\}$$

**Decrypt data**

Decrypt $SFN_1'$ with $K_{prv}$ => $SFN_{1d}$
Decrypt $SFN_2'$ with $K_{prv}$ => $SFN_{2d}$
Decrypt $SFN_3'$ with $K_{prv}$ => $SFN_{3d}$
... ... ... ... ...
Decrypt $SFN_k'$ with $K_{prv}$ => $SFN_{kd}$

**Extract information**

$SFN_{1d}$ => $I_1$
$SFN_{2d}$ => $I_2$
$SFN_{3d}$ => $I_3$
... ... ... ... ...
$SFN_{kd}$ => $I_k$

Fig. 4

Gather S110 data information

Build an S120 base data set

Encrypt data set S130

Create an encrypted data set tagged with S140 boxes

Convert frame-tagged encrypted data set to S150 machine-readable graphics set

Show graph S160

Fig. 5

Read a set of machine-readable codes
displayed in sequence S210

Decrypt machine-readable codes in an
encrypted data set labeled with S220 boxes

Extract an encrypted data set by removing
frame numbers from the encrypted data set
labeled with S230 frames

Extract private key and set of frame numbers
S240

Assemble an encrypted base data set S250

Decrypt encrypted base data set with private
key S260

Extract S270 information data

Fig. 6

**Mobile Device (User)** ⌒ 13a    13b ⌒ **Mobile Device (Operator)**

Show ID, QR

52

Scan Event QR

60

50

Scan QR

54

Show Event QR

58

No

Determine Event

56

Yes

Data Verification

62

Order/Product Selection

64

Generate order QR

66

Scan order QR

68

Generate SAR code

70

Scan SAR

72

Deduct balance, Get products

76

Create transaction

74

Fig. 7

150

Mobile Device (User)       13a        13b       Mobile Device (Operator)

Selection — 152

No ← Determine payment process — 154 — Yes → Add balance — 156

Show ID, QR — 158 → Scan QR — 160

Scan Event QR — 166 ← Show Event QR — 164 ← No — Determine Event — 162 → Yes

Data verification — 168

Order/Product Selection — 170

Generate order QR — 172

Scan order QR — 174

Generate SAR code — 176 → Scan SAR — 178

Deduct balance, Get products — 182 → Determine balance refund — 184 → No → End — 186

Create transaction — 180

Yes

Process refund — 188

Fig. 8

Fig. 9

252

Mobile Device (User)　　　13a　　13b　　Mobile Device (Operator)

254 — Select refund method

264 — Show ID, QR

Scan QR — 256

258 — Event correct

260 — Show Event QR

No

262 — Scan Event QR / Operation

Yes

268 — Scan QR

Show refund QR — 266

270 — Deduct amount from balance

272 — Generate SAR

Scan SAR — 274

278 — Create transaction

Create transaction — 276

Fig. 10

300

Mobile Device (User)　　13a　　13b　　Mobile Device (Operator)

302

| Select quantity |

312

| Show ID, QR | → | Scan QR | 304

No

| Scan Event QR / Operation | ← | Show Event QR | ← ◇ Event correct 306

310　　　　　　　　　　　　308

Yes

| Scan SAR Code | ← | Generate SAR code | 314

316

| Recharge quantity | | Create transaction |

318　　　　　　　　　　　　320

Fig. 11

350

Mobile Device (User)　　13a　　13b　　Mobile Device (Operator)

352

Download app

354

Determine incognito

Yes

No

Enter with personal profile

356

362

Select quantity

358

Show ID, QR

360

Scan QR

No

Scan Event QR / Operation

Show Event QR

Event correct

368

366

Yes

364

Scan SAR Code

372

370

Generate SAR code

Recharge quantity

374

Create transaction

376

Fig. 12

Fig. 13

User | Mobile device with payment processing | Operator device

**450** **451**

**452** Select order/products

**454** Select payment method

**456** Deliver payment

**458** Process payment

**460** Generate/print product QR

**462** Get product QR

Deliver product QR
**464**

**466** Scan QR

**468** QR correct?

No

Yes

Error message
**470**

**472** Create transaction

**474** Deliver product

Fig. 14A

User 450'

Mobile device with payment processing 451

Operator device

Select order/products 452'

Select payment method 454'

Deliver payment 456'

Process payment 458'

Generate/print product QR 460'

Get product QR 462'

Deliver product QR 464'

Save QR 466'

Deliver product 474'

Fig. 14B

EP 4 636 669 A1

Fig. 15

Mobile Device (User)   13a   13b   Mobile Device (Operator)

550

Show ID, QR
552

Scan QR   554

558
Show QR   No   Event correct   556

Scan QR
560

Yes

Validate data   562

Select products/order   564

Fig. 16

Select service amount   566

Generate QR order   568

570
Scan order QR

572   Generate SAR code   Scan SAR Code   574

Discount quantity / get products

Create transaction

578   576

600

Mobile Device (User)  13a    13b    Mobile Device (Operator)

602

| Show ID, QR | → | Scan QR | 604 |

606

Event correct

No ← Show QR ← Event correct

Scan QR ← Show QR

610    608    Yes

| Validate data | 612 |

| Select order/products | 614 |

| Generate QR order | 616 |

618

| Scan order QR |

| Generate SAR code | → | Scan SAR Code | 622 |

620

| Select service amount | 624 |

| Generate QR order | 626 |

628

| Scan order QR |

630 | Generate SAR code | → | Scan SAR Code | 632 |

| Discount quantity / get products | | Create transaction | 634 |

636

Fig. 17

650

13a    13b

Mobile Device (User)          Mobile Device (Operator)

652

| Show ID, QR | → | Scan QR | 654 |

656

Event correct

No

Scan QR ← Show QR ←

660    658

Ye s

Validate data    662

Select order/products    664

Generate QR order    666

668

Scan order QR

670    Select service amount

672    Generate SAR code → Scan SAR Code    674

678    Discount quantity / get products          Create transaction    676

Fig. 18

13a    13b

700

Mobile Device (User)          Mobile Device (Operator)

Add / Link card        Signal strength
704                                    708

702                                            Scan QR

Show QR code
706

712                    No
Scan Event / Operation    Open          Event correct
QR                    Event QR                         710

714                              Yes

Recharge
request    722              Validate card
716

No       Card on file
718

Yes

720              No       User device
has signal
Fig. 19              User device
Local Offline                                724
balance
No                          Yes

Yes

Select order/products
726

(page 21)

45

Fig. 19 cont.

| Servers (Cloud) 13c | 700 | Mobile Device (User) 13a | Mobile Device (Operator) 13b |

(page 20, Show QR code)

(Page 19, card on file or balance)

Select order/products 726

Event with tip 728 — No / Yes

Select service 730

Recharge request 722

Scan order amount QR 734

Generate order amount QR 732

Balance and/or credit 736 — No / Yes

Payment process 738

Payment processor 740

Internet signal 754 — No / Yes

Payment approved 742 — No / Yes

Create transaction 744

Generate SAR code 746

Scan SAR Code 748

Update local balances Get products 752

Create transaction 750

Fig. 20

13c

800

13a

13b

Servers (Cloud)　　　　Mobile Device (User)　　　　Mobile Device (Operator)

(page 22, Show QR code)

(Page 22, card on file or balance)

Recharge request

Fig. 20 cont.

Select order/products — 826

Event with tip — 828　No

Yes

Select service — 830

Generate order amount QR

834

Scan QR order

832

Confirm Order

Event opportunities for improvement

856

838

Pay with Device balance — 838

No

Payment process

Payment processor — 840

Yes

836

No

Payment approved

Yes

Create transaction

Internet signal — 854

842

844

846

No　　Yes

Generate SAR code

Scan SAR Code

848

Update local balances Get products

852

Create transaction

850

Fig. 21

Fig. 21 cont.

1000

Mobile Device (User)

13a    13b

Mobile Device (Operator)

Add / Link card

1002

Signal strength

1052    1004

Approve amount

Show QR code

1006

Scan Event / Operation QR

1014

Open Event QR

1012

Recharge request

1022

1008

Scan QR

1010

No

Event correct

Yes

Validate card

1016

No

Card on file

Yes    1018

No

Pre-authorized balance

Yes    1024

No

Local balance offline

Yes    1020

Select order/products    1026

(page 27)

Fig. 22

1000

13b

13a

Servers (Cloud) 13c

Mobile Device (User)

Mobile Device (Operator)

**(page 26, Show QR code)**

**(page 26, card on file or balance)**

Select order/products 1026

Recharge request

1022

Event with tip 1028 No

Yes

Select service

1030

Fig. 22 cont.

1034

Scan order amount QR

Generate order amount QR

1032

Generate SAR code

Scan SAR Code 1048

1046

1058

1056 No

Trigger processing

1052

Update local balances Get products

Create transaction 1050

**Synchron ized devices**

Yes

Payment process

Payment processor 1040

**Synchronize to server** 1054

1038 No

Payment approved Yes

Update transactions 1044

1042

Mobile Device (User)      13a    13b    Mobile Device (Operator)

1100

Select order/products    1102

Select service charge    1104

Generate order amount QR    1106

1108

Scan QR

1112

ERROR message with unequal variable

No  ← Variables Ok?    1110

Yes

Generate SAR code    1114

Scan SAR Code    1118

Update local balances Get products    1116

Create transaction    1120

Fig. 23

EP 4 636 669 A1

Fig. 24

## INTERNATIONAL SEARCH REPORT

| International application No. |
|---|
| PCT/IB2023/062561 |

| A. CLASSIFICATION OF SUBJECT MATTER |
|---|
| G06Q20/00, H04L9/00, G06K19/00, G06F21/00 (2024.01) |
| According to International Patent Classification (IPC) or to both national classification and IPC |

| B. FIELDS SEARCHED |
|---|
| Minimum documentation searched (classification system followed by classification symbols) |
| (CIP) G06Q, H04L, G06K, G06F |
| Documentation searched other than minimum documentation to the extent that such documents are included in the fields searched |
| Electronic data base consulted during the international search (name of data base and, where practicable, search terms used) |
| DERWENT INNOVATION, GOOGLE, ESP@CENET, INAPI |

| C. DOCUMENTS CONSIDERED TO BE RELEVANT |

| Category* | Citation of document, with indication, where appropriate, of the relevant passages | Relevant to claim No. |
|---|---|---|
| X | US 2022391877 A1 (MYCASHLESS SAPI de CV) 08 December 2022 (08.12.2022) Abstract; [0010], [0011], [0060], [0063], [0068-0069], [0077], [0084-0085], [0088-0091], [0094], [0114]; claims 1-3, 10, 12; figs. 1, 2, 4, 4A, 5A, 6, 6A, 10A, 11A, 14A, 15. | 1-28 |
| X | WO 2016039617 A1 (MIMOS BERHAD) 17 March 2016 (17.03.2016) Abstract; page 2, lines 10-12, 21-22, 28-30; page 3, lines 18-19; page 4, lines 1-2; page 5, lines 19-20; page 11, lines 18-19; claims 7. | 1-28 |
| X | US 2013237155 A1 (KIM, M.) 12 September 2013 (12.09.2013) Abstract; [0032], [0048], [0049], [0053], [0055]; | 1, 19, 21, 23, 25, 26, 28 |
| Y | claim 3. | 2, 27 |

| [X] Further documents are listed in the continuation of Box C. | [X] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 March 2024 (19.03.2024) | 28 March 2024 (28.03.2024) |

| Name and mailing address of the ISA/ INAPI, Av. Libertador Bernardo O'Higgins 194, Piso 17 Santiago, Chile | Authorized officer |
|---|---|
| Facsimile No. | Telephone No. |

Form PCT/ISA/210 (second sheet) (January 2015)

**INTERNATIONAL SEARCH REPORT**

International application No.

PCT/IB2023/062561

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2014158510 A1 (MOTOROLA MOBILITY LLC) 02 October 2014 (02.10.2014) Abstract; [0015], [0031], [0047]-[0049]; fig. 7-9. | 2, 27 |
| A | US 2014084067 A1 (ALCATEL-LUCENT BELL N .V.) 27 March 2014 (27.03.2014) The whole document | |
| A | US 9576172 B2 (FACEBOOK, INC.) 21 February 2017 (21.02.2017) The whole document | |

Form PCT/ISA/210 (continuation of second sheet) (January 2015)

INTERNATIONAL SEARCH REPORT
Information on patent family members

International application No.

PCT/IB2023/062561

| | | | |
|---|---|---|---|
| US2022391877A1 | 08-12-2022 | AU2020284171A1 | 06-01-2022 |
| | | CA3142324A1 | 03-12-2020 |
| | | CR20220607A | 18-05-2023 |
| | | EP3977671A1 | 06-04-2022 |
| | | EP3977671A4 | 07-06-2023 |
| | | IL290021A | 01-03-2022 |
| | | MX2020005559A | 24-11-2022 |
| | | MX2020005638A | 19-08-2021 |
| | | MX2022014124A | 04-01-2023 |
| | | US11455616B2 | 27-09-2022 |
| | | US11720879B2 | 08-08-2023 |
| | | US2020380493A1 | 03-12-2020 |
| | | WO2020240508A1 | 03-12-2020 |
| WO2016039617A1 | 17-03-2016 | MY192555A | 28-08-2022 |
| US2013237155A1 | 12-09-2013 | US2015319616A1 | 05-11-2015 |
| | | US9143936B2 | 22-09-2015 |
| | | US9717002B2 | 25-07-2017 |
| WO2014158510A1 | 02-10-2014 | US10430568B2 | 01-10-2019 |
| | | US2014282923A1 | 18-09-2014 |
| | | US2015244715A1 | 27-08-2015 |
| | | US2018077150A1 | 15-03-2018 |
| | | US9794253B2 | 17-10-2017 |
| US2014084067A1 | 27-03-2014 | EP2898613A1 | 29-07-2015 |
| | | EP2898613B1 | 28-11-2018 |
| | | JP2015534181A | 26-11-2015 |
| | | JP2017126343A | 20-07-2017 |
| | | KR101675244B1 | 10-11-2016 |
| | | KR20150046210A | 29-04-2015 |
| | | US8770484B2 | 08-07-2014 |
| | | WO2014045105A1 | 27-03-2014 |
| | | WO2014045105A4 | 10-07-2014 |
| US9576172B2 | 21-02-2017 | US2016078143A1 | 17-03-2016 |

Form PCT/ISA/210 (patent family annex) (January 2015)

**REFERENCES CITED IN THE DESCRIPTION**

**Patent documents cited in the description**

- US 20150178721 A
- US 20130111208 A
- MX 2020005559 A
- MX 397751